# FASCICULE DE BREVET EUROPEEN

(11) **EP 0 966 874 B1**
(45) Date de publication et mention de la délivrance du brevet: **27.08.2003**
(21) Numéro de dépôt: 99440133.9
(22) Date de dépôt: 04.06.1999
(51) Int. Cl.: A01C 7/20, A01B 49/06, A01B 73/04

(54) **Semoir**
Sähmaschine
Sowing machine

(30) Priorité: 25.06.1998 FR 9808188
(43) Date de publication de la demande: 29.12.1999
(73) Titulaire: KUHN S.A., 67706 Saverne Cedex (FR)
(72) Inventeur: Kirch, Michel, 67260 Keskastel (FR)

(56) Documents cités:
- EP-A- 0 044 569
- EP-A- 0 513 939
- EP-A- 0 629 337
- GB-A- 2 197 573

## Description

La présente invention concerne un semoir repliable à grande largeur de travail. Ce semoir comporte :
- un châssis destiné à être lié directement ou indirectement à un véhicule moteur ;
- au moins un premier organe de référence et un deuxième organe de référence liés chacun audit châssis au moyen d'une articulation respective permettant de les pivoter vers le haut dans une position de transport au moyen d'un premier dispositif de manoeuvre ;
- un dispositif d'implantation de la semence dans le sol comprenant au moins une première structure porteuse et une deuxième structure porteuse liées chacune directement ou indirectement audit châssis au moyen d'une articulation respective permettant de les pivoter vers le haut dans une position de transport au moyen d'un deuxième dispositif de manoeuvre ;
lesdits organes de référence et lesdites structures porteuses s'étendent en position de travail au moins sensiblement parallèlement au sol et au moins sensiblement orthogonalement à la direction d'avance au travail.

Il est connu dans l'état de la technique un semoir destiné à être attelé à une machine de travail du sol. Un tel semoir est décrit par exemple dans EP 0 629 337.

Ce semoir connu comporte un dispositif d'implantation de la semence dans le sol comprenant une première structure porteuse et une deuxième structure porteuse liées chacune à l'une de leur extrémités directement ou indirectement à un châssis au moyen d'une articulation respective permettant de les pivoter vers le haut dans une position de transport au moyen d'un dispositif de manoeuvre.

A chaque structure porteuse sont liés des éléments semeurs au moyen desquels la semence est implantée dans le sol.

Lors du travail, les trois structures porteuses s'étendent sensiblement orthogonalement à la direction d'avance sur une grande largeur de travail et peuvent se déplacer librement en hauteur par rapport à la machine de travail du sol. On notera en sus que les structures porteuses latérales sont articulées à la structure porteuse centrale de sorte à suivre les dénivellations du sol. A cet effet, lors du travail, chaque structure porteuse repose sur le sol au moyen d'au moins une roue située sous la structure porteuse correspondante, devant les éléments semeurs et derrière la machine de travail du sol.

Ce semoir présente un certain nombre d'inconvénients. En effet, les roues qui supportent les structures porteuses laissent des traces sur le sol et tassent ce dernier ce qui ne permet pas aux éléments semeurs situés dans les sillons desdites roues d'implanter correctement la semence dans le sol.

En outre, les roues supportant les structures porteuses sont de diamètre relativement conséquent pour assurer une bonne portance desdites structures porteuses, ce qui se traduit par un espace relativement important entre le semoir et la machine de travail du sol et donc par un porte-à-faux relativement important compliquant le transport et la conception du semoir et de la machine agricole.

On notera encore que, dans des conditions de travail difficiles, notamment humides, la terre reste collée aux roues ce qui génère trop souvent des bourrages du semoir.

Un autre inconvénient réside dans le fait que, compte tenu de la grande largeur de travail du semoir, les articulations liant la première et la deuxième structures porteuses directement ou indirectement au châssis sont particulièrement sollicitées lors du travail.

La présente invention a pour but de remédier aux inconvénients de ce semoir connu, tout en veillant à obtenir un semoir qui s'adapte aisément au relief du terrain et qui peut être mis en position de transport ou de travail d'une manière simple et pratique sans être onéreux.

A cet effet, un semoir selon un premier aspect de la présente invention est caractérisé en ce qu'il est prévu d'une part au moins un dispositif d'appui escamotable comportant au moins une butée escamotable et au moins un élément d'appui, ledit dispositif d'appui escamotable est destiné à s'appuyer contre l'un au moins des organes de référence de manière à limiter le déplacement de l'une au moins des structures porteuses en position de travail, et d'autre part un dispositif de commande à distance destiné à escamoter au moins partiellement ledit (lesdits) dispositif(s) d'appui escamotable(s) avant la mise en position de transport desdits organes de référence et/ou desdites structures porteuses ou à mettre en place ledit (lesdits) dispositif(s) d'appui escamotable(s) après la mise en position de travail desdits organes de référence et/ou desdites structures porteuses, ledit dispositif de commande à distance comporte au moins un organe d'actionnement.

Un tel dispositif d'appui escamotable permet d'obtenir un semoir qui s'adapte aisément au relief du terrain et qui peut être mis en position de transport ou de travail d'une manière simple et pratique sans avoir à se soucier du (des) dispositif(s) d'appui escamotable(s).

Selon un autre aspect de la présente invention, le semoir est caractérisé en ce qu'il est prévu, en sus, au moins un dispositif d'ancrage automatique liant automatiquement, lors de la mise en position de travail, au moins une structure porteuse à un organe de référence correspondant et déliant automatiquement, lors de la mise en position de transport, ladite (lesdites) structure(s) porteuse(s) dudit organe de référence correspondant.

Un tel dispositif d'ancrage automatique permet de moins solliciter les articulations liant la première et la deuxième structures porteuses directement ou indirectement au châssis et en sus de stabiliser et rigidifier lesdites première et deuxième structures porteuses suivant la direction d'avance tout en ayant un semoir qui peut être mis en position de transport ou de travail d'une manière simple et pratique sans avoir à se soucier dudit dispositif d'ancrage automatique.

L'invention concerne également les caractéristiques suivantes considérées isolément ou dans toutes leurs combinaisons techniquement possibles :
- il est prévu :
   * un premier dispositif d'appui escamotable destiné à s'appuyer contre le premier organe de référence de manière à limiter le déplacement de la première structure porteuse ; et
   * un deuxième dispositif d'appui escamotable destiné à s'appuyer contre le deuxième organe de référence de manière à limiter le déplacement de la deuxième structure porteuse ;
- le premier dispositif d'appui escamotable comporte d'une part une première butée escamotable liée à la première structure porteuse dans le voisinage de l'extrémité extérieure de celle-ci et d'autre part un premier élément d'appui fixé au premier organe de référence dans le voisinage de l'extrémité extérieure de celui-ci, ladite première butée escamotable étant destinée, en position de travail, à s'appuyer contre ledit premier élément d'appui;
- le deuxième dispositif d'appui escamotable comporte d'une part une deuxième butée escamotable liée à la deuxième structure porteuse dans le voisinage de l'extrémité extérieure de celle-ci et d'autre part un deuxième élément d'appui fixé au deuxième organe de référence dans le voisinage de l'extrémité extérieure de celui-ci, ladite deuxième butée escamotable étant destinée, en position de travail, à s'appuyer contre ledit deuxième élément d'appui ;
- il est prévu au moins un moyen de réglage par dispositif d'appui escamotable permettant de varier la position initiale des butées escamotables et/ou des éléments d'appui ;
- le dispositif de commande à distance comporte :
   * un premier organe d'actionnement destiné à actionner le premier dispositif d'appui escamotable ;
   * un deuxième organe d'actionnement destiné à actionner le deuxième dispositif d'appui escamotable ;
- le premier organe d'actionnement est destiné à actionner la première butée escamotable ;
- le deuxième organe d'actionnement est destiné à actionner la deuxième butée escamotable ;
- il est prévu :
   * un premier dispositif d'ancrage automatique destiné à lier automatiquement lors de la mise en position de travail, la première structure porteuse au premier organe de référence ;
   * un deuxième dispositif d'ancrage automatique destiné à lier automatiquement, lors de la mise en position de travail, la deuxième structure porteuse au deuxième organe de référence.
Ce premier et ce deuxième dispositifs d'ancrage automatiques permettent de moins solliciter les articulations liants directement ou indirectement lesdites structures porteuses au châssis et de stabiliser et rigidifier lesdites structures porteuses.
- le premier dispositif d'ancrage automatique comporte d'une part un premier élément d'accrochage fixé au premier organe de référence dans le voisinage de l'extrémité extérieure de celui-ci au moyen d'un premier dispositif de fixation et d'autre part un premier organe d'accrochage lié à la première structure porteuse dans le voisinage de l'extrémité extérieure de celle-ci et destiné à s'accrocher automatiquement au premier élément d'accrochage lors de la mise en position de travail et à se décrocher automatiquement de celui-ci lors de la mise en position de transport ;
- le deuxième dispositif d'ancrage automatique comporte d'une part un deuxième élément d'accrochage fixé au deuxième organe de référence dans le voisinage de l'extrémité extérieure de celui-ci au moyen d'un deuxième dispositif de fixation et d'autre part un deuxième organe d'accrochage lié à la deuxième structure porteuse dans le voisinage de l'extrémité extérieure de celle-ci et destiné à s'accrocher automatiquement au deuxième élément d'accrochage lors de la mise en position de travail et à se décrocher automatiquement de celui-ci lors de la mise en position de transport ;
- chaque dispositif de fixation permet de fixer l'élément d'accrochage correspondant dans différentes positions de manière à pouvoir régler avec précision la position de l'élément d'accrochage pour assurer un accrochage optimum ;
- le premier élément d'accrochage comporte une première portion d'appui de forme particulière sur laquelle est destiné à s'appuyer le premier organe d'accrochage en position de travail et en ce que le deuxième élément d'accrochage comporte une deuxième position d'appui de forme particulière sur laquelle est destiné à s'appuyer le deuxième organe d'accrochage en position de travail ;
Ces portions d'appui de forme particulière permettent de toujours assurer le contact entre l'élément d'accrochage et l'organe d'accrochage en position de travail quelle que soit la position relative de la structure porteuse correspondante par rapport à l'organe de référence correspondant ;
- il est prévu un dispositif de commande à distance permettant d'escamoter au moins partiellement ledit (lesdits) dispositif(s) d'ancrage automatique(s) avant la mise en position de transport desdits organes de référence et desdites structures porteuses ou de mettre en place ledit (lesdits) dispositif(s) d'ancrage automatique(s) après la mise en position de travail desdits organes de référence et desdites structures porteuses ;
- le dispositif de commande à distance comporte :
   * un premier organe d'actionnement destiné à actionner le premier dispositif d'ancrage automatique ;
   * un deuxième organe d'actionnement destiné à actionner le deuxième dispositif d'ancrage automatique ;
   * le premier organe d'actionnement est destiné à actionner le premier organe d'accrochage ;
   * le deuxième organe d'actionnement est destiné à actionner le deuxième organe d'accrochage ;
- le dispositif de commande à distance comporte en sus des moyens de commande permettant de commander les organes d'actionnement en fonction de l'état du premier dispositif de manoeuvre ;
- le premier dispositif de manoeuvre comporte au moins un élément de manoeuvre qui est en communication avec le premier organe d'actionnement et le deuxième organe d'actionnement ;
- le premier dispositif de manoeuvre comporte deux éléments de manoeuvre :
   * un premier élément de manoeuvre constitué d'un premier vérin de manoeuvre ;
   * un deuxième élément de manoeuvre constitué d'un deuxième vérin de manoeuvre,
   lesdits vérins de manoeuvre présentant chacun une première chambre et une deuxième chambre ;
- le premier organe d'actionnement est constitué d'un premier vérin d'actionnement présentant une première chambre et une deuxième chambre ;
- le deuxième organe d'actionnement est constitué d'un deuxième vérin d'actionnement présentant une première chambre et une deuxième chambre ;
- les deuxièmes chambres des vérins de manoeuvre sont couplées en parallèle avec les deuxièmes chambres des vérins d'actionnement, cet agencement faisant partie d'un premier circuit ;
- la section transversale de chaque deuxième chambre des vérins d'actionnement est plus petite que la section transversale de chaque deuxième chambre des vérins de manoeuvre ;
- les premières chambres des vérins de manoeuvre sont en communication avec les premières chambres des vérins d'actionnement, cet agencement faisant partie d'un deuxième circuit ;
- le premier circuit et le deuxième circuit sont des circuits hydrauliques qui sont alimentés par une centrale hydraulique ;
- le deuxième circuit comporte une valve de séquence destinée à autoriser l'alimentation en fluide des vérins d'actionnement en fonction de l'état des vérins de manoeuvre ;
- la valve de séquence est située entre les premières chambres des vérins de manoeuvre et les premières chambres des vérins d'actionnement ;
- le deuxième circuit comporte un limiteur de débit destiné à limiter le débit du fluide en provenance de la centrale hydraulique ;
- le limiteur de débit est situé en amont de la valve de séquence ;
- l'organe d'accrochage associé à une structure porteuse est formé par la butée escamotable associée à ladite structure porteuse ;
- l'élément d'accrochage associé à un organe de référence est fixé à l'élément d'appui associé audit organe de référence au moyen du dispositif de fixation correspondant.

L'invention concerne également une machine agricole combinée de travail du sol et de semis comportant une machine de travail du sol et un semoir, ledit semoir présentant une ou plusieurs des caractéristiques ci-dessus.

Selon une autre caractéristique de l'invention, la machine agricole combinée de travail du sol et de semis comporte deux rouleaux de rappuyage constituant les organes de référence.

Selon une autre caractéristique supplémentaire de l'invention, la machine agricole combinée de travail du sol et de semis comporte des outils de travail du sol qui peuvent se déplacer librement vers le haut par rapport aux rouleaux de rappuyage ce qui permet avantageusement de surmonter des obstacles qui s'étendent dans la parcelle, comme des pierres par exemple.

Selon une autre caractéristique supplémentaire de l'invention, les rouleaux de rappuyage sont liés à la machine de travail du sol.

Selon une autre caractéristique supplémentaire de l'invention, les rouleaux de rappuyage sont de forme au moins sensiblement cylindrique et s'étendent au moins sensiblement sur toute la largeur du semoir, chaque rouleau de rappuyage étant destiné à rouler sur la surface du sol en tournant autour de son axe longitudinal respectif s'étendant au moins sensiblement horizontalement et transversalement à la direction d'avance au travail.

Selon une autre caractéristique supplémentaire de l'invention, l'élément d'appui comporte une portion de surface cylindrique au moins sensiblement centrée sur l'axe longitudinal du rouleau de rappuyage correspondant sur laquelle vient s'appuyer la butée correspondante, ce qui permet avantageusement de conserver au moins sensiblement la même position de la butée correspondante lorsque la machine de travail du sol se déplace vers le haut ou le bas par exemple.

D'autres objets, caractéristiques et avantages de l'invention apparaissent dans la description suivante avec référence aux dessins annexés qui représentent, à titre d'exemples non limitatifs, quelques formes de réalisation du semoir selon l'invention.

Sur ces dessins :
- la figure 1 représente une vue de dessus d'une machine agricole combinée de travail du sol et de semis en position de travail, attelée à un véhicule moteur et comportant, selon une première forme de réalisation, un semoir selon l'invention ;
- la figure 2 représente une vue de côté de la machine agricole combinée de travail du sol et de semis en position de travail ;
- la figure 3 représente une vue de côté de la machine agricole combinée de travail du sol et de semis en position intermédiaire ;
- la figure 4 représente une vue de derrière partielle de la machine agricole combinée de travail du sol et de semis en position de transport ;
- la figure 5 représente, à une plus grande échelle, une vue suivant la flèche V définie sur la figure 1 ;
- la figure 6 représente, à une plus grande échelle, une vue partielle suivant la flèche VI définie sur la figure 2 ;
- la figure 7 représente une vue partielle suivant la flèche VII définie sur la figure 6 ;
- la figure 8 représente à une plus grande échelle, une vue partielle suivant la flèche VIII définie sur la figure 2 ;
- la figure 9 représente une coupe partielle vue suivant le plan IX-IX défini sur la figure 8 ;
- la figure 10 représente une vue partielle suivant la flèche VII définie sur la figure 6 avec le dispositif d'appui escamoté ;
- la figure 11 représente une vue de côté du semoir seul lié à un véhicule moteur selon l'invention en position de travail selon une deuxième forme de réalisation ;
- la figure 12 représente un schéma hydraulique du dispositif de commande à distance.

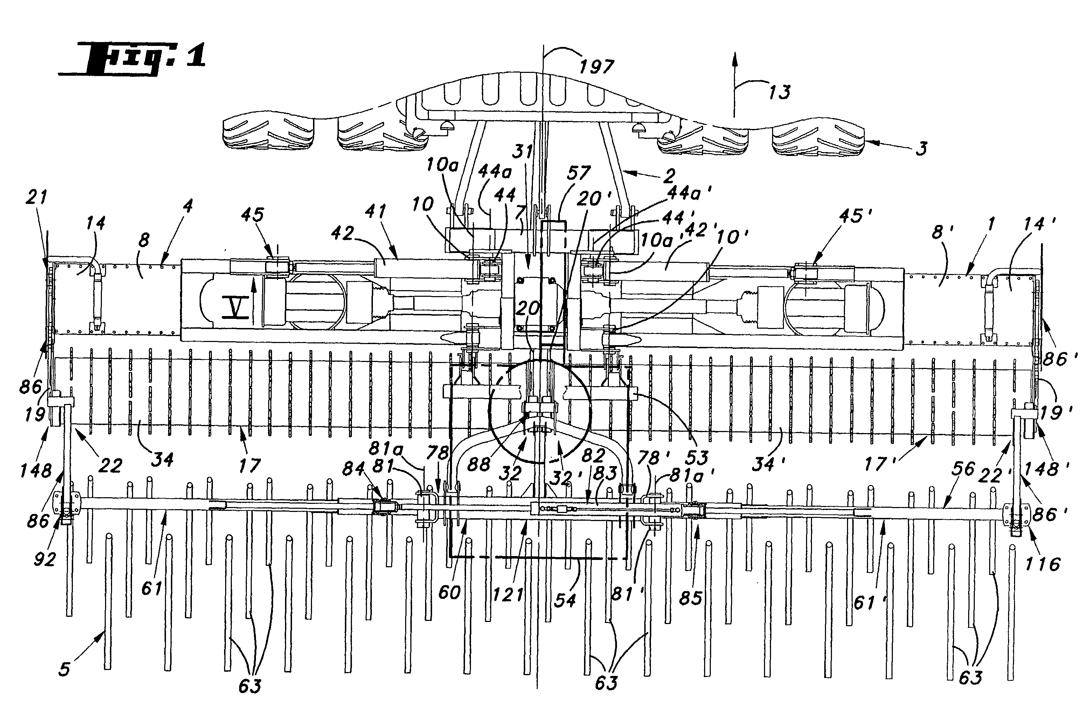

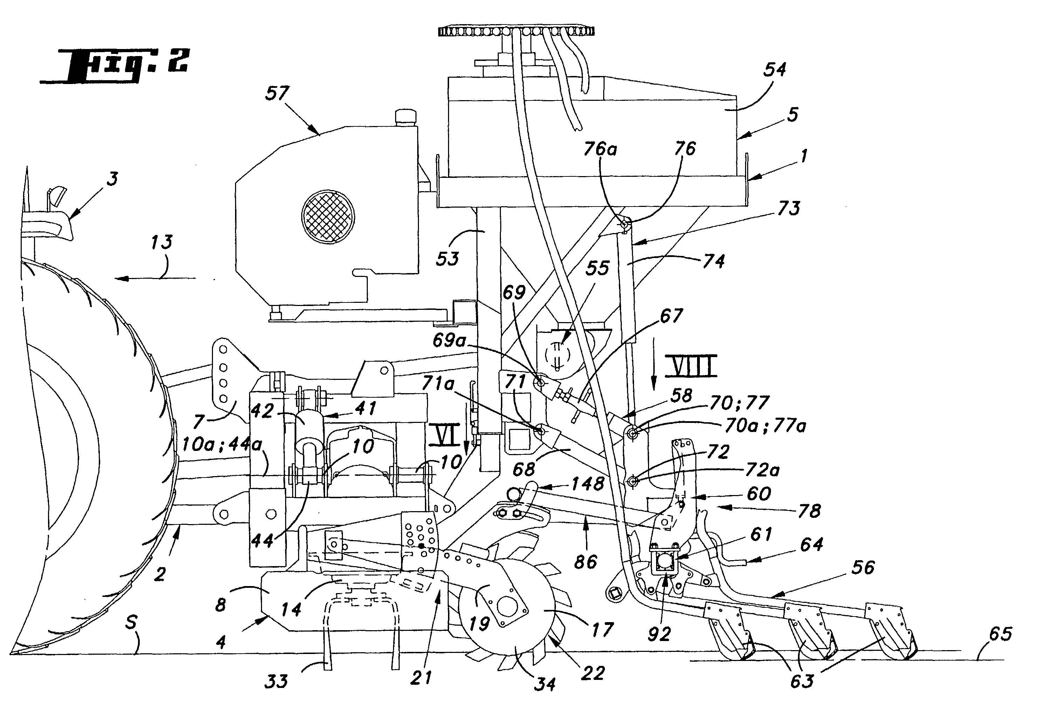

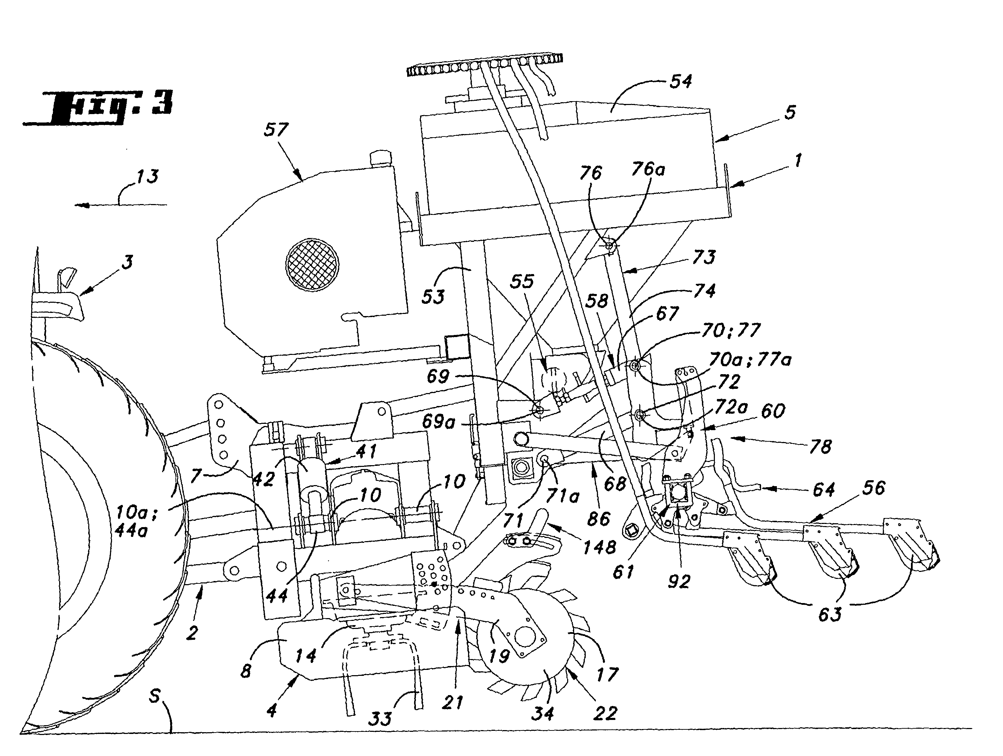

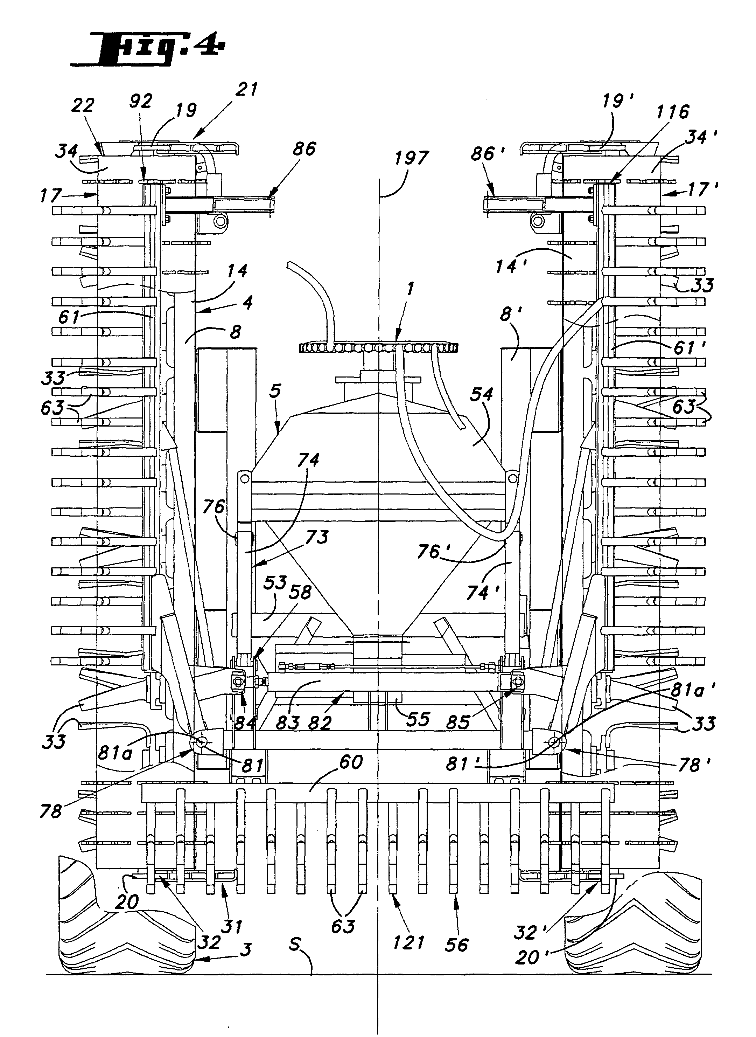

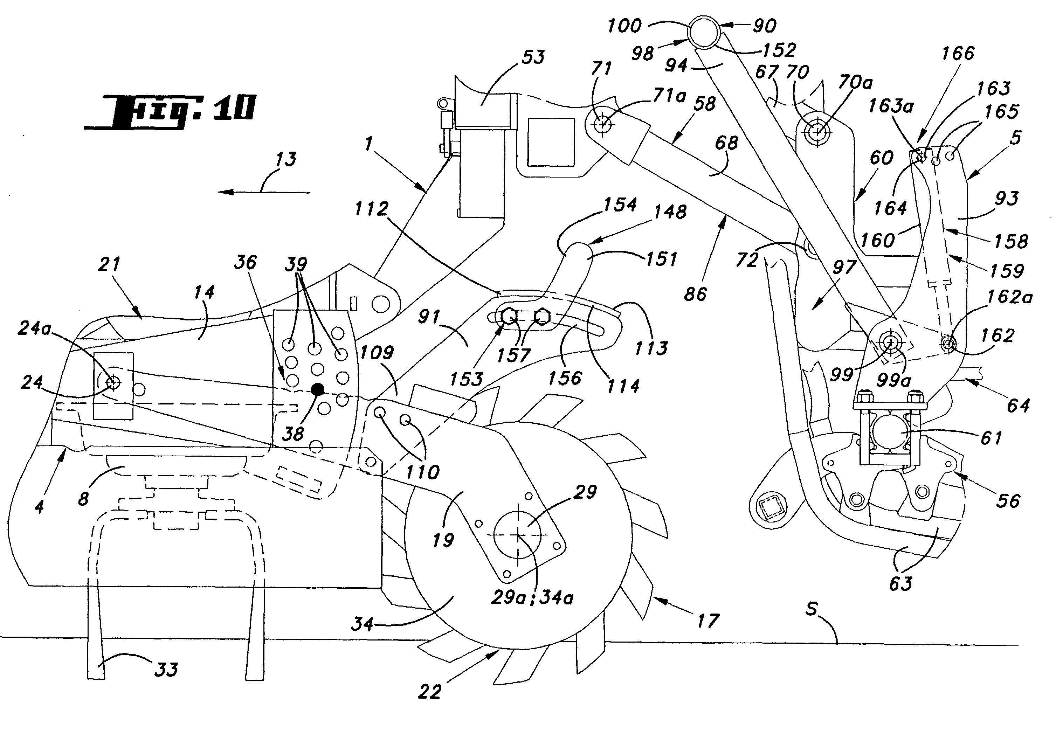

Sur les figures 1 à 10 apparaît une machine agricole combinée de travail du sol et de semis (1) liée à un dispositif d'attelage (2) d'un véhicule moteur (3). Cette machine agricole combinée de travail du sol et de semis (1) comprend une machine de travail du sol (4) et un semoir (5). La machine de travail du sol (4) comporte un premier châssis (7) lié au dispositif d'attelage (2) du véhicule moteur (3) et deux unités de travail du sol (8, 8') liées chacune audit premier châssis (7) au moyen d'une première articulation (10, 10') d'axe longitudinal (10a, 10a') au moins sensiblement horizontal dirigé au moins sensiblement suivant la direction d'avance au travail (13).

Chaque unité de travail du sol (8, 8') comporte, selon l'exemple de réalisation représenté, une herse rotative (14, 14') à laquelle est lié un organe de référence (17, 17') au moyen de deux bras (19, 20, 19', 20').

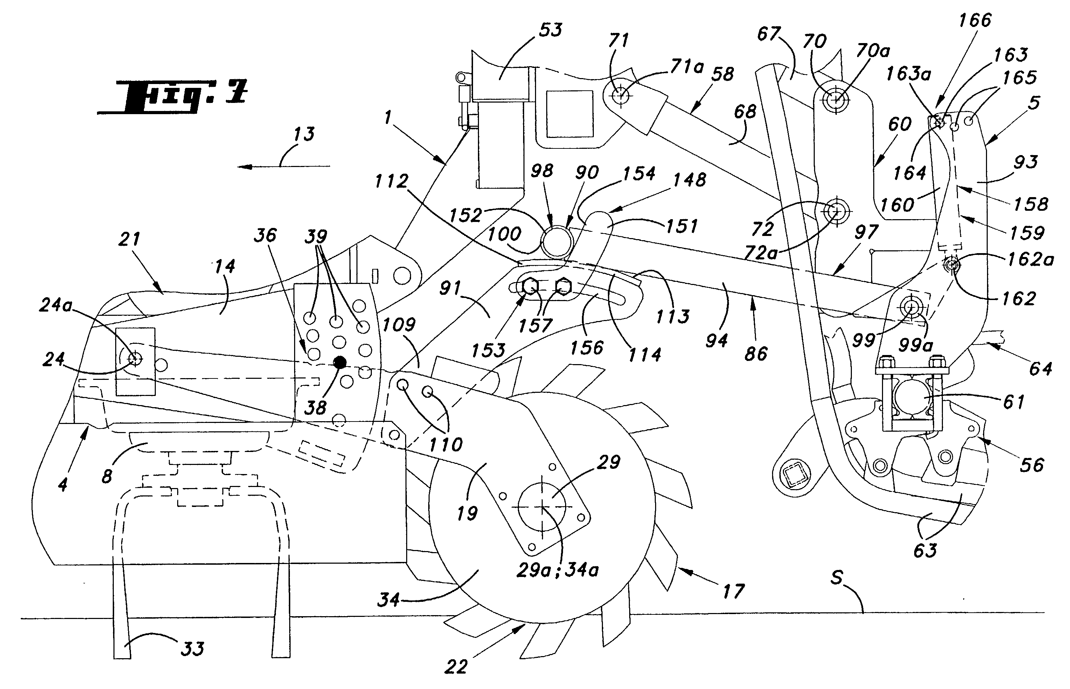

A la lumière de la figure 7, on voit que le premier bras (19) est d'une part lié à l'extrémité extérieure (21) de la herse rotative (14) au moyen d'une troisième articulation (24) d'axe longitudinal (24a) au moins sensiblement horizontal et orthogonal à la direction d'avance au travail (13) et est lié d'autre part à l'extrémité extérieure (22) du premier organe de référence (17) au moyen d'une quatrième articulation (29) d'axe longitudinal (29a) au moins sensiblement parallèle à l'axe longitudinal (24a) de ladite troisième articulation (24).

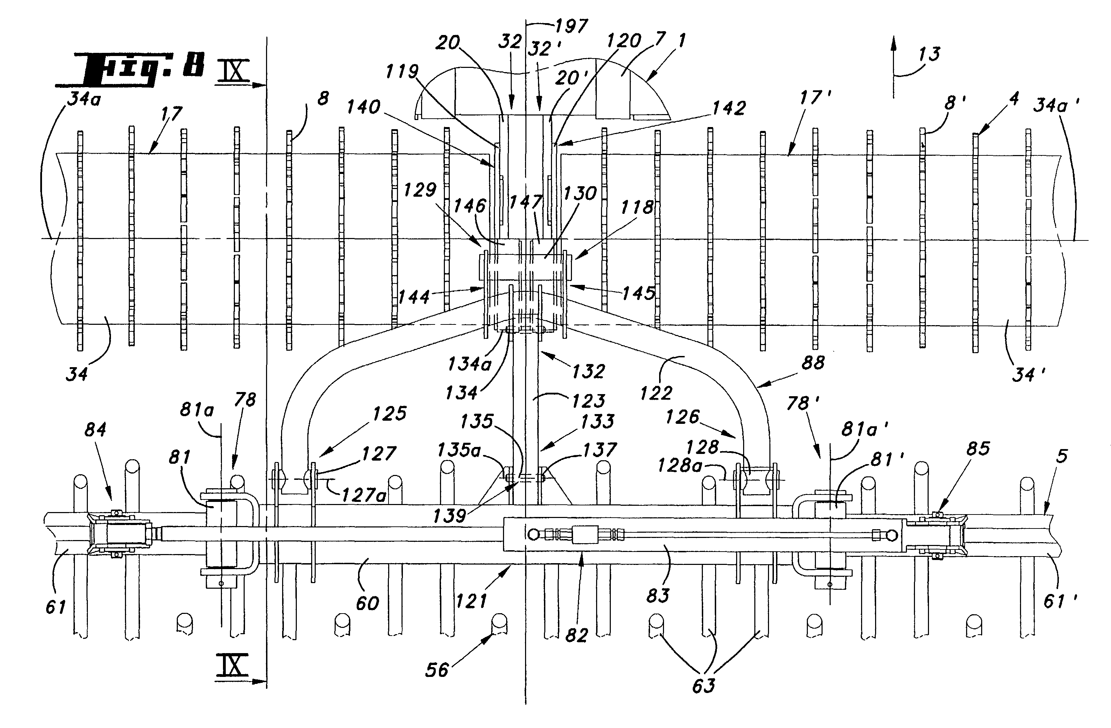

Le deuxième bras (20) (figures 1 et 8) est quant à lui lié à l'extrémité intérieure (31) de la herse rotative (14) et à l'extrémité intérieure (32) de l'organe de référence (17) de la même manière que celle décrite ci-dessus concernant le premier bras (19).

Les bras (19', 20') étant quant à eux liés à la herse rotative (14') et au deuxième organe de référence (17') de la même manière que les bras (19, 20) sont liés à la herse rotative (14) et au premier organe de référence (17) tel que décrit précédemment et tel qu'illustré par la figure 1.

On remarquera que chaque herse rotative (14, 14') comporte des outils de travail du sol (33) et que chaque organe de référence (17, 17') est constitué d'un rouleau de rappuyage (34, 34') de forme au moins sensiblement cylindrique. Les deux rouleaux de rappuyage (34, 34') s'étendent derrière les herses rotatives (14, 14') sensiblement orthogonalement à la direction d'avance au travail (13) et sur sensiblement toute la largeur de la machine de travail du sol (4) et du semoir (5). Chaque rouleau de rappuyage (34, 34') est destiné, lors du travail, à rouler sur la surface du sol (S) autour de son axe longitudinal (34a, 34a') respectif qui est au moins sensiblement confondu avec les deux axes longitudinaux (29a, 29a') correspondants. Ces rouleaux de rappuyage (34, 34') permettent d'une part de rappuyer le sol (S) pour permettre au semoir (5) de travailler dans de bonnes conditions et forment d'autre part de très bons organes de référence du fait qu'ils s'étendent toujours à une même distance du sol (S). A cet effet, on voit à la lumière de la figure 7 qu'il est prévu un dispositif de réglage (36, 36') de profondeur de travail de chaque herse rotative (14, 14') lequel consiste à limiter le débattement vers le haut des bras (19, 20, 19', 20') autour des axes longitudinaux (24a, 24a') des troisièmes articulations (24, 24') correspondantes. Chaque dispositif de réglage (36, 36') comporte à cet effet une broche (38, 38') pouvant être engagée dans différents trous (39) prévus à différents niveaux sur la herse rotative (14, 14') correspondante. Ces dispositifs de réglage (36, 36') sont largement connus par l'homme du métier et ne seront donc pas décrits davantage. On remarquera que les dispositifs de réglage (36, 36') sont au moins sensiblement identiques et que seul un desdits dispositifs de réglage a été représenté.

On notera encore que chaque herse rotative (14, 14') peut, avec ses outils de travail du sol (33), se déplacer librement vers le haut par rapport aux rouleaux de rappuyage (34, 34') correspondants grâce notamment aux dispositifs de réglage (36, 36') correspondants qui limitent le débattement des bras (19, 20, 19', 20') correspondants uniquement vers le haut. Un tel agencement permet avantageusement de surmonter des obstacles qui peuvent s'étendre dans la parcelle comme des pierres par exemple.

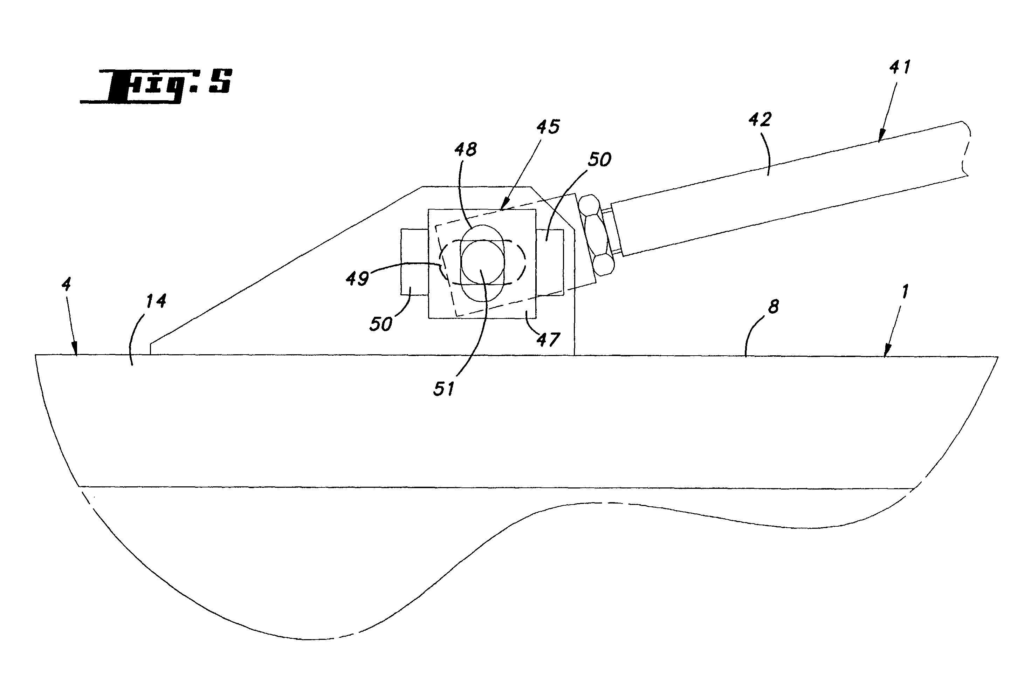

On notera encore qu'il est prévu un premier dispositif de manoeuvre (41) permettant de pivoter chaque unité de travail (8, 8') avec les rouleaux de rappuyage (34, 34') vers le haut jusque dans une position sensiblement verticale de transport autour des axes longitudinaux (10a, 10a') des premières articulations (10, 10'). A cet effet, le premier dispositif de manoeuvre (41) comporte un premier et un deuxième vérins de manoeuvre (42, 42'). Chaque vérin de manoeuvre (42, 42') est lié d'une part au premier châssis (7) au moyen d'une cinquième articulation (44, 44') d'axe longitudinal (44a, 44a') au moins sensiblement parallèle à l'axe longitudinal (10a, 10a') de la première ou de la deuxième articulation (10, 10') et d'autre part à une unité de travail (8, 8') au moyen d'un premier dispositif de liaison (45, 45'). Chaque dispositif de liaison (45, 45') permet, lors du travail, d'une part un certain débattement de l'unité de travail (8, 8') correspondante par rapport au premier châssis (7), de manière à permettre à l'unité de travail (8, 8') correspondante de s'adapter au relief du sol (S) ou d'autre part de condamner ledit débattement. A cet effet, on voit à la lumière de la figure 5 que le dispositif de liaison (45) comporte une cale (47) de forme sensiblement carrée à l'intérieure de laquelle est prévu un premier trou oblong (48). L'unité de travail (8) comporte d'une part, un deuxième trou oblong (49) s'étendant sensiblement horizontalement et d'autre part deux guides (50) s'étendant de part et d'autre de la cale (47) de sorte à maintenir cette dernière dans une position bien précise. On notera encore qu'il est prévu un tourillon (51) s'étendant au travers du premier trou oblong (48) de la cale (47), du deuxième trou oblong (49) de l'unité de travail (8) et au travers de l'extrémité du vérin de manoeuvre (42).

Le diamètre extérieur du tourillon (51) est sensiblement égal ou quelque peu inférieur à la dimension transversale du premier et du deuxième trous oblongs (48, 49) de manière à ce qu'il ait un faible jeu transversal dans un des trous oblongs (48, 49) tout en pouvant se déplacer dans le sens longitudinal desdits trous oblongs (48, 49) si l'agencement de la cale (47) le permet.

Selon l'exemple de réalisation représenté, on notera que la cale (47) s'étend entre les deux guides (50) de manière que son premier trou oblong (48) s'étende sensiblement verticalement, c'est-à-dire orthogonalement au deuxième trou oblong (49) de l'unité de travail (8) correspondant.

Lors du travail, le vérin de manoeuvre (42) étant de longueur fixe et les deux trous oblongs (48, 49) s'étendant orthogonalement l'un à l'autre, ne permet pas de mouvement relatif entre ledit vérin de manoeuvre (42) et l'unité de travail (8) puisque le tourillon (51) ne peut pas se déplacer dans le deuxième trou oblong (49).

Pour permettre au contraire, un certain débattement de l'unité de travail (8) par rapport au premier châssis (4) afin d'obtenir une bonne adaptation de ladite unité de travail (8) au sol (S), il suffit d'extraire la cale (47) des guides (50) et de la tourner de 90° pour ensuite la remettre en place entre lesdits guides (50). A cet effet, le premier trou oblong (48) de la cale (47) s'étend sensiblement horizontalement et est confondu avec le deuxième trou oblong (49) de l'unité de travail (8) ce qui permet donc au tourillon (51) de se déplacer longitudinalement dans les deux trous oblongs (48, 49) et donc à l'unité de travail du sol (8) de pivoter quelque peu autour de l'axe longitudinal (10a) de la première articulation (10) correspondante. On notera que le dispositif de liaison (45) est sensiblement identique au dispositif de liaison (45'). Ce dernier ne sera donc pas décrit davantage.

Le semoir (5) quant à lui comporte selon l'exemple de réalisation représenté :
- un deuxième châssis (53) lié au premier châssis (7) de la machine de travail du sol (4) ;
- une trémie (54) fixée audit deuxième châssis (53) et à la base de laquelle est situé un dispositif de dosage (55) permettant de doser la semence en provenance de la trémie (54) ;
- un dispositif d'implantation (56) de la semence dans le sol situé dans le proche voisinage des organes de référence (17, 17') ;
- un dispositif de soufflerie (57) débitant un flux d'air pour véhiculer la semence ; et
- une structure de liaison (58) liant ledit dispositif d'implantation (56) au deuxième châssis (53).

Le dispositif d'implantation (56) de la semence dans le sol comporte lui-même une structure porteuse centrale (60) et une première et une deuxième structures porteuses latérales (61, 61') auxquelles sont liés des éléments semeurs (63) au moyen desquels la semence est introduite dans le sol (S). Ces éléments semeurs (63) peuvent être réglés au moyen d'un dispositif de terrage (64) lequel exerce un effort vers le bas sur lesdits éléments semeurs (63) et permet à chaque élément semeur (63) de suivre individuellement les petites dénivellations du sol (S).

On remarquera encore à la lumière des figures 1 à 4 que les éléments semeurs (63) sont disposés l'un à côté de l'autre et suivant trois rangés situées l'une derrière l'autre ce qui permet avantageusement de semer dans des conditions très difficiles.

La structure porteuse centrale (60) du dispositif d'implantation (56) de la semence dans le sol est liée au deuxième châssis (53) au moyen de la structure de liaison (58). Cette structure de liaison (58) permet à la structure porteuse centrale (60) de se déplacer au moins sensiblement vers le haut et vers le bas tout en conservant un certain parallélisme entre la surface du sol (S) et une droite (65) passant par l'extrémité inférieure des éléments semeurs (63). Une telle structure de liaison (58) permet d'une part d'assurer une profondeur de semis au moins sensiblement identique des trois rangés d'éléments semeurs (63) lorsque les structures porteuses (60, 61, 61') se déplacent verticalement et d'autre part d'éviter des réglages complexes et onéreux lorsque l'on souhaite modifier la hauteur de travail desdites structures porteuses (60, 61, 61').

La structure de liaison (58) comporte deux bielles supérieures (67) et deux bielles inférieures (68) s'étendant à partir du deuxième châssis (53) vers l'arrière et vers le bas en position de travail. Chaque bielle supérieure (67) est liée d'une part au deuxième châssis (53) au moyen d'une sixième articulation (69) respective d'axe longitudinal (69a) au moins sensiblement horizontal et transversal à la direction d'avance (13) et d'autre part à la structure porteuse centrale (60) au moyen d'une septième articulation (70) respective d'axe longitudinal (70a) au moins sensiblement parallèle à l'axe longitudinal (69a) de ladite sixième articulation (69).

Chaque bielle inférieure (68) est liée quant à elle, d'une part au deuxième châssis (53) au moyen d'une huitième articulation (71) d'axe longitudinal (71a) qui est, selon une vue de dessus, au moins sensiblement confondu avec l'axe longitudinal (69a) de la sixième articulation (69) et d'autre part à la structure porteuse centrale (60) au moyen d'une neuvième articulation (72) d'axe longitudinal (72a) qui est, selon une vue de dessus, au moins sensiblement confondu avec l'axe longitudinal (70a) de la septième articulation (70).

Les bielles inférieures (68) et les bielles supérieures (67) forment avec le deuxième châssis (53) et la structure porteuse centrale (60) au moins sensiblement un parallélogramme.

On notera encore que les bielles supérieures (67) sont, selon l'exemple de réalisation représenté, de longueur réglable de manière à pouvoir ajuster au moins le parallélisme initial entre la droite (65) et le sol (S).

A la lumière des figures 1 à 4, on voit en outre qu'il est prévu un dispositif de relevage (73) permettant de relever le dispositif d'implantation (56) au moins sensiblement parallèlement par rapport au sol (S) pour effectuer les manoeuvres en bout de parcelle par exemple ou pour le transport.

A cet effet, le dispositif de relevage (73) comporte un troisième et un quatrième vérins de manoeuvre (74, 74') liés chacun d'une part au deuxième châssis (53) au moyen d'une dixième articulation (76, 76') et d'autre part à la structure porteuse centrale (60) au moyen d'une onzième articulation (77, 77').

A la lumière de la figure 1, on voit que les trois structures porteuses (60, 61, 61') s'étendent, en position de travail, au moins sensiblement orthogonalement à la direction d'avance au travail (13) et derrière les rouleaux de rappuyage (34, 34') sur sensiblement toute la largeur de la machine de travail du sol (4) et dans le proche voisinage de ces derniers (34, 34'). A cet effet, les trois structures porteuses (60, 61, 61') s'étendent dans le prolongement l'une de l'autre. Plus précisément les structures porteuses latérales (61, 61') sont liées aux extrémités latérales (78, 78') de la structure porteuse centrale (60) au moyen d'une douzième articulation (81, 81') respective d'axe longitudinal (81a, 81a') au moins sensiblement horizontal et dirigée au moins sensiblement suivant la direction d'avance au travail (13). Une telle liaison des structures porteuses latérales (61, 61') à la structure porteuse centrale (60) permet avantageusement de replier lesdites structures porteuses latérales (61, 61') vers le haut pour le transport par exemple et permet en sus une meilleure adaptation desdites structures porteuses (60, 61, 61') au relief du sol (S). A cet effet est prévu un deuxième dispositif de manoeuvre (82) permettant de pivoter chaque structure porteuse latérale (61, 61') vers le haut autour des axes longitudinaux (81a, 81a') de la douzième articulation (81, 81') correspondante. A cet effet le deuxième dispositif de manoeuvre (82) comporte un quatrième vérin de manoeuvre (83) lié d'une part à la première structure porteuse latérale (61) au moyen d'un deuxième dispositif de liaison (84) et d'autre part à la deuxième structure porteuse latérale (61') au moyen d'un troisième dispositif de liaison (85).

Ce deuxième et ce troisième dispositifs de liaison (84, 85) permettent chacun, lors du travail, d'une part un certain débattement des structures porteuses latérales (61, 61') par rapport à la structure porteuse centrale (60) ou d'autre part de condamner ledit débattement de manière que les trois structures porteuses (60, 61, 61') forment un ensemble rigide. Le deuxième et le troisième dispositifs de liaison (84, 85) sont semblables au premier dispositif de liaison (45) décrit précédemment, et ne seront par conséquent pas décrits davantage.

Lors du travail, le dispositif d'implantation (56) de la semence dans le sol (S) s'appuie au moins partiellement contre les rouleaux de rappuyage (34, 34') pour limiter le déplacement dudit dispositif d'implantation (56) et optimiser ainsi le contrôle de la profondeur de semis.

On voit plus précisément à la lumière des différentes figures 1 à 10 qu'il est prévu :
- un premier dispositif d'appui escamotable (86) s'appuyant, lors du travail, contre le premier rouleau de rappuyage (34) de manière à limiter le déplacement de la première structure porteuse latérale (61) ;
- un deuxième dispositif d'appui escamotable (86') s'appuyant, lors du travail, contre le deuxième rouleau de rappuyage (34') de manière à limiter le déplacement de la deuxième structure porteuse latérale (61') ; et
- un troisième dispositif d'appui (88) s'appuyant, lors du travail, contre l'un au moins des rouleaux de rappuyage (34, 34') de manière à limiter le déplacement de la structure porteuse centrale (60).

On notera encore que, lors du travail, le troisième et le quatrième vérins de manoeuvre (74, 74') du dispositif de relevage (73) sont flottants de manière à autoriser aux différentes structures porteuses (60, 61, 61') de se déplacer vers le haut et vers le bas.

A cet effet, chaque dispositif d'appui (86, 86', 88) limite essentiellement le déplacement des structures porteuses (60, 61, 61') correspondantes vers le bas de manière à assurer une position desdites structures porteuses (60, 61, 61') au moins sensiblement identique par rapport à la surface du sol (S) ce qui permet d'obtenir une profondeur de semis au moins sensiblement constante.

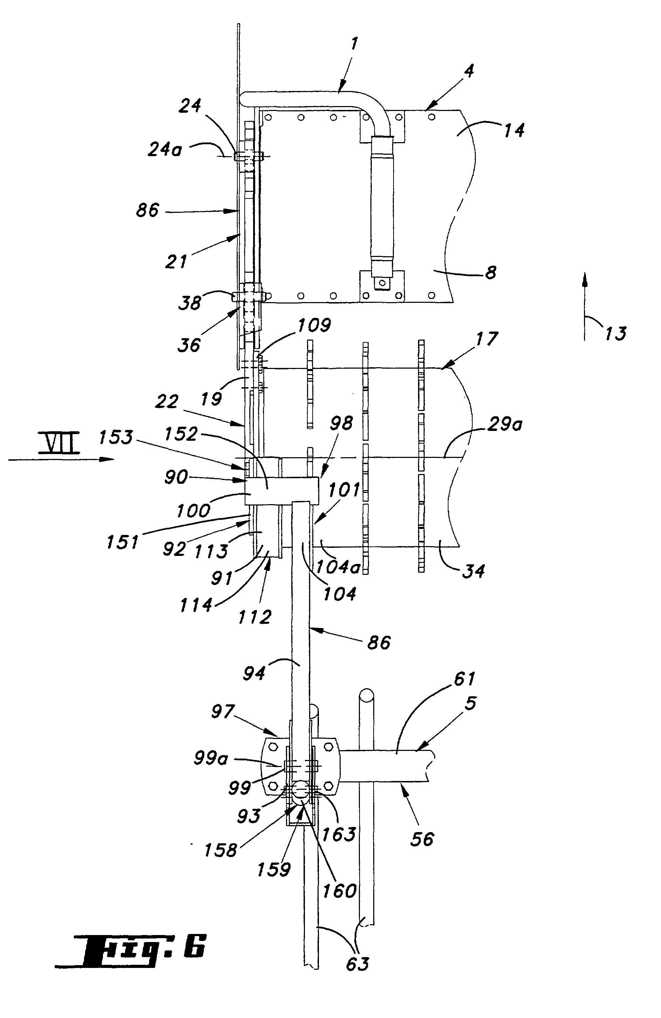

A la lumière des figures 6, 7 et 10, on voit que le premier dispositif d'appui escamotable (86) comporte d'une part une première butée escamotable (90) et d'autre part un premier élément d'appui (91). La première butée escamotable (90) est fixée à l'extrémité extérieure (92) de la première structure porteuse latérale (61) et comporte, selon l'exemple de réalisation représenté, un support latéral (93) qui est bridé sur ladite première structure porteuse latérale (61) et un bras d'appui (94). Le bras d'appui (94) est lié à l'une (97) de ses extrémités (97, 98) au support latéral (93) au moyen d'une treizième articulation (99) d'axe longitudinal (99a) au moins sensiblement parallèle à l'axe longitudinal (34a) du premier rouleau de rappuyage (34) situé juste devant la première structure porteuse latérale (61). A l'autre extrémité (98), le bras d'appui (94) est doté d'une partie coudée (100) qui s'étend sensiblement orthogonalement à la direction d'avance au travail (13) et qui s'appuie lors du travail contre le premier élément d'appui (91).

Le premier élément d'appui (91) du premier dispositif d'appui (86) est fixé à l'extrémité extérieure (22) du premier organe de référence (17). Plus précisément, on voit à la lumière de la figure 7 que le premier élément d'appui (91) est fixé à son extrémité inférieure (109) au premier bras (19) liant le premier organe de référence (17) à la herse rotative (14) au moyen de boulons (110).

Selon l'exemple de réalisation représenté, le premier élément d'appui (91) s'étend vers l'arrière et vers le haut et comporte à son extrémité supérieure (112) une surface d'appui (113) située au moins sensiblement à la verticale de l'axe longitudinal (34a) du premier rouleau de rappuyage (34) et au-dessus de ce dernier et sur laquelle s'appuie, lors du travail, la partie coudée (100) du bras d'appui (94). Cette surface d'appui (113) est formée par une portion de surface cylindrique (114) au moins sensiblement centrée sur l'axe de rotation (34a) du premier rouleau de rappuyage (34). Un tel agencement de la portion de surface cylindrique (114) permet avantageusement à la herse rotative (14) de se déplacer vers le haut et vers le bas pour surmonter un obstacle par exemple, sans que cela ait des répercussions sur la première butée (90) et donc sur la première structure porteuse latérale (61). En effet, lors d'un tel déplacement de la herse rotative (14), le premier élément d'appui (91) bascule vers l'arrière ou vers l'avant au moins sensiblement autour de l'axe de rotation (34a) du premier rouleau de rappuyage (34) et la partie coudée (100) du bras d'appui (94) se déplace le long de la portion de surface cylindrique (114) sans pour autant se déplacer vers le haut ou vers le bas du fait que ladite portion de surface cylindrique (114) est au moins sensiblement centrée sur ledit axe de rotation (34a).

Le deuxième dispositif d'appui (86') est semblable au premier dispositif d'appui (86). Ce deuxième dispositif d'appui (86') comporte sensiblement le même nombre d'éléments qui sont une réplique sensiblement identique des éléments constituant le premier dispositif d'appui (86). Ce deuxième dispositif d'appui (86') ne sera donc pas décrit davantage.

On notera toutefois que le deuxième dispositif d'appui (86') comporte d'une part une deuxième butée (90') fixée à l'extrémité extérieure (116) de la deuxième structure porteuse latérale (61') et d'autre part un deuxième élément d'appui (91') fixé au bras (19') liant le deuxième organe de référence (17') à la herse rotative (14') et sur lequel vient s'appuyer ladite deuxième butée (90') lors du travail.

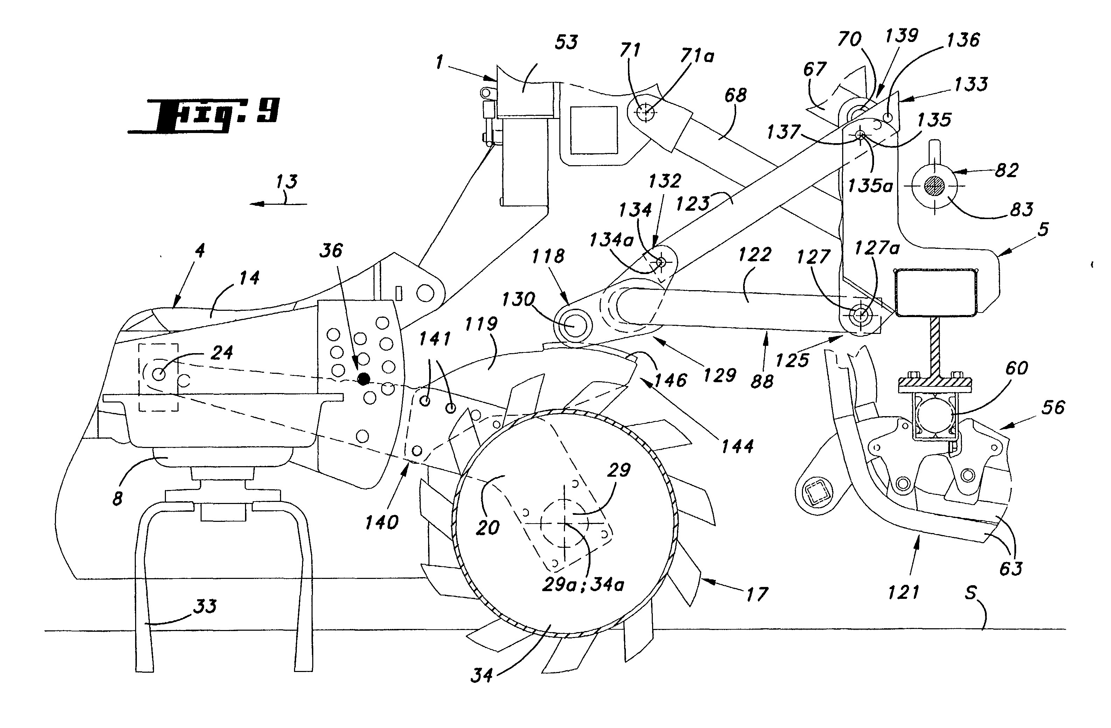

A la lumière des figures 8 et 9, on voit que le troisième dispositif d'appui (88) comporte d'une part une troisième butée (118) et d'autre part deux éléments d'appui (119, 120).

La troisième butée (118) est fixée sensiblement à la partie médiane (121) de la structure porteuse centrale (60) et comporte, selon l'exemple de réalisation représenté, un arceau (122) et un bras de maintien (123). L'arceau (122) s'étend, en position de travail, sensiblement horizontalement et vers l'avant dans la direction d'avance au travail (13). Il est lié à chacune de ses extrémités arrières (125, 126) à la structure porteuse centrale (60) au moyen d'une seizième articulation (127) et d'une dix-septième articulation (128) d'axes longitudinaux (127a, 128a) respectifs au moins sensiblement parallèles aux axes longitudinaux (34a, 34a') des rouleaux de rappuyage (34, 34') situés juste devant ladite structure porteuse centrale (60).

A l'extrémité frontale (129) de l'arceau (122) est prévue une traverse d'appui (130) qui s'étend en position de travail au-dessus des deux éléments d'appui (119, 120) et qui s'appuie contre au moins un desdits éléments d'appui (119, 120). Le bras de maintien (123) est quant à lui lié à l'une (132) de ses extrémités (132, 133) à l'arceau (122) au moyen d'une dix-huitième articulation (134) d'axe longitudinal (134a) au moins sensiblement parallèle aux axes longitudinaux (127a, 128a) de la seizième et de la dix-septième articulations (127, 128), ladite dix-huitième articulation (134) étant située dans le proche voisinage de la traverse d'appui (130).

A l'autre extrémité (133) le bras de maintien (123) est lié à la structure porteuse centrale (60) au moyen d'une dix-neuvième articulation (135) d'axe longitudinal (135a) au moins sensiblement parallèle à l'axe longitudinal (134a) de la dix-huitième articulation (134). Cette dix-neuvième articulation (135) est située, d'une part, selon une vue de dessus, au moins sensiblement au milieu de la seizième et de la dix-septième articulations (127, 128) et d'autre part, selon une vue de côté, plus haut que la dix-huitième articulation (134) ce qui permet avantageusement d'obtenir une bonne stabilité de la troisième butée (118).

A la lumière de la figure 9, on voit en outre que le bras de maintien (123) comporte à l'autre extrémité (133) une pluralité de trous (136) au travers desquels est destiné à s'étendre un autre arbre (137) faisant partie de la dix-neuvième articulation (135). Ces différents trous (136) permettent de lier le bras de maintien (123) à la structure porteuse centrale (60) en différentes positions, ce qui permet avantageusement de déplacer vers le haut ou vers le bas la traverse d'appui (130) pour l'ajuster au même niveau que la partie coudée (100, 100') des premières butées (90, 90').

Les différents trous (136) avec l'autre arbre (137) forment ainsi un autre moyen de réglage (139) permettant de varier la position initiale de la troisième butée (118) de sorte à pouvoir varier la position de la structure porteuse centrale (60) en fonction d'une part des différentes conditions de travail et en fonction des différents équipements dont est doté le semoir (5) ou la machine de travail du sol (4) et d'autre part en fonction de la position des structures porteuses latérales (61, 61').

Un tel moyen de réglage (139) permet par exemple d'équiper la machine de travail du sol (4) de rouleau de rappuyage de différents diamètres.

L'élément d'appui primaire (119) de la troisième butée (118) est fixé à l'extrémité intérieure (32) du premier organe de référence (17) alors que l'élément d'appui secondaire (120) est fixé à l'extrémité intérieure (32') du deuxième organe de référence (17'). Plus précisément, on voit à la lumière des figures 8 et 9 que l'élément d'appui primaire (119) est fixé à son extrémité inférieure (140) au deuxième bras (20) liant le premier organe de référence (17) à la herse rotative (14) au moyen de boulons (141) alors que l'élément d'appui secondaire (120) est fixé à son extrémité inférieure (142) au deuxième bras (20') liant le deuxième organe de référence (17') à la herse rotative (14') au moyen d'autres boulons (non représentés).

Selon l'exemple de réalisation représenté, les éléments d'appui (119, 120) s'étendent dans le proche voisinage l'un de l'autre et chacun s'étend vers l'arrière et vers le haut. Chaque élément d'appui (119, 120) comporte à son extrémité supérieure (144, 145) correspondante une autre surface d'appui (146, 147) située au moins sensiblement à la verticale des axes longitudinaux (34a, 34a') des rouleaux de rappuyage (34, 34') et au-dessus de ces derniers. Lors du travail, la traverse d'appui (130) de l'arceau (122) s'appuie sur l'une ou sur les deux surfaces d'appui (146, 147) selon les conditions de travail. Plus précisément c'est sur la surface d'appui (146, 147) qui s'étend le plus en hauteur que s'appuie la traverse d'appui (130) ce qui permet avantageusement de positionner, lors du travail, la structure porteuse centrale (60) en fonction de l'organe de référence situé le plus en hauteur et permet donc de ce fait de contrôler le plus précisément la profondeur de travail des éléments semeurs (63), notamment des éléments semeurs (63) liés à ladite structure porteuse centrale (60).

Les surfaces d'appui (146, 147) des éléments d'appui (119, 120) du troisième dispositif d'appui (88) ont au moins sensiblement la même forme que la surface d'appui (113) du premier élément d'appui (91) du premier dispositif d'appui (86) de manière à remplir au moins sensiblement une fonction identique à celle du premier élément d'appui (91). Par conséquent, les surfaces d'appui (146, 147) ne seront pas décrites davantage.

On remarquera encore à la lumière des figures 1, 6 et 7 qu'il est prévu un premier et un deuxième dispositifs d'ancrage automatiques (148, 148') liant automatiquement, lors de la mise en position de travail, la première et la deuxième structures porteuses latérales (61, 61') à l'organe de référence (17, 17') correspondant et déliant automatiquement, lors de la mise en position de transport, la première et la deuxième structures porteuses latérales (61, 61') dudit organe de référence (17, 17') correspondant. Plus précisément, on notera qu'il est prévu d'une part un premier dispositif d'ancrage automatique (148) destiné à lier automatiquement lors de la mise en position de travail, la première structure porteuse latérale (61) au premier rouleau de rappuyage (34) et d'autre part un deuxième dispositif d'ancrage automatique (148') destiné à lier automatiquement lors de la mise en position de travail, la deuxième structure porteuse latérale (61') au deuxième rouleau de rappuyage (34').

A cet effet, le premier dispositif d'ancrage automatique (148) comporte d'une part un premier élément d'accrochage (151) et d'autre part un premier organe d'accrochage (152). Ce premier élément d'accrochage (151) est fixé au premier organe de référence (17) dans le voisinage de l'extrémité extérieure (22) de celui-ci au moyen d'un premier dispositif de fixation (153). Plus précisément ce premier élément d'accrochage (151) est fixé au premier élément d'appui (91) au moyen dudit premier dispositif de fixation (153).

Le premier organe d'accrochage (152) est quant à lui lié à la première structure porteuse latérale (61) dans le voisinage de l'extrémité extérieure (92) de celle-ci et destiné à s'accrocher automatiquement au premier élément d'accrochage (151) lors de la mise en position de travail et à se décrocher automatiquement de celui-ci lors de la mise en position de transport. Plus précisément, le premier organe d'accrochage (152) est formé par la première butée escamotable (90). A la lumière des figures 6 et 7, on voit plus clairement que, en position de travail, la partie coudée (100) du bras d'appui (94) de la première butée escamotable (90) vient s'accrocher au premier élément d'accrochage (151).

Le premier élément d'accrochage (151) comporte une première portion d'appui (154) de forme particulière sur laquelle vient s'appuyer le premier organe d'accrochage (152) en position de travail. Cette forme particulière de cette première portion d'appui (154) permet de toujours assurer le contact entre le premier élément d'accrochage (151) et le premier organe d'accrochage (152) en position de travail quelle que soit la position relative de la première structure porteuse latérale (61) et par rapport au premier rouleau de rappuyage (34). En effet, lors du travail, les rouleaux de rappuyage (34, 34') suivent les aspérités du sol (S) tout comme le dispositif d'implantation (56) de la semence dans le sol par l'intermédiaire des dispositifs d'appui (86, 86', 88).

Ainsi lorsque les rouleaux de rappuyage (34, 34') se déplacent vers le haut ou vers le bas, ils entraînent avec eux le dispositif d'implantation (56) lequel se déplace en sus quelque peu vers l'avant ou vers l'arrière du fait que les bielles (67, 68) de la structure de liaison (58) s'étendent, à partir du deuxième châssis (53), vers l'arrière et vers le bas en position de travail.

A cet effet, la première portion d'appui (153) du premier élément d'accrochage (151) s'étend vers l'arrière et vers le haut, et est de forme légèrement arrondie. La forme de cette première portion d'appui (154) est dictée par les caractéristiques du parallélogramme définies par les bielles (67, 68), le deuxième châssis (53) et la structure porteuse centrale (60). Un tel premier dispositif d'ancrage automatique (148) permet notamment de moins solliciter la douzième articulation (81) liant la première structure porteuse latérale (61) à la structure porteuse centrale (60) et de rigidifier ladite première structure porteuse latérale (61) lors du travail.

Pour assurer un accrochage optimum du bras d'appui (94) de la première butée escamotable (90) au premier élément d'accrochage (151), le premier dispositif de fixation (153) permet de fixer ledit premier élément d'accrochage (151) dans différentes positions le long de l'extrémité supérieure (112) du premier élément d'appui (91) de manière à pouvoir régler et ajuster au mieux la position dudit premier élément d'accrochage (151).

A cet effet, on remarquera à la lumière de la figure 7 qu'il est prévu, selon l'exemple de réalisation représenté, un trou oblong (156) situé aux alentours de l'extrémité supérieure (112) du premier élément d'appui (91).

Ce trou oblong (156) est au moins sensiblement parallèle à la portion de surface cylindrique (114) ce qui permet avantageusement de déplacer le premier élément d'accrochage (151) au moins sensiblement parallèlement à ladite portion de surface cylindrique (114). Ce premier dispositif de fixation (153) comporte en sus deux boulons (157) traversant de part en part le premier élément d'accrochage (151) et le trou oblong (156), ces deux boulons (157) permettent de fixer ledit premier élément d'accrochage (151) au premier élément d'appui (91).

Le deuxième dispositif d'ancrage automatique (148') est semblable au premier dispositif d'ancrage automatique (148). Ce deuxième dispositif d'ancrage automatique (148') comporte sensiblement le même nombre d'éléments qui sont une réplique sensiblement identique des éléments constituant le premier dispositif d'ancrage automatique (148). Ce deuxième dispositif d'ancrage automatique (148') ne sera donc pas décrit davantage. On notera toutefois que le deuxième dispositif d'ancrage automatique (148') comporte un deuxième élément d'accrochage (151') et un deuxième organe d'accrochage (152'), ledit deuxième élément d'accrochage (151') étant fixé au deuxième organe de référence (17') au moyen d'un deuxième dispositif de fixation (153').

A la lumière des différentes figures, on voit en outre qu'il est prévu un dispositif de commande à distance (158) permettant d'escamoter au moins partiellement les dispositifs d'ancrage automatiques (148, 148') avant la mise en position de transport des organes de référence (17, 17') et desdites structures porteuses latérales (61, 61') ou de mettre en place lesdits dispositifs d'ancrage automatiques (148, 148') après la mise en position de travail desdits organes de référence (17, 17') et desdites structures porteuses latérales (61, 61').

A cet effet, le dispositif de commande à distance (158) comporte :
- un premier organe d'actionnement (159) destiné à actionner le premier dispositif d'ancrage automatique (148) et le premier dispositif d'appui escamotable (86) ;
- un deuxième organe d'actionnement (159') destiné à actionner le deuxième dispositif d'ancrage automatique (148') et le deuxième dispositif d'appui escamotable (86').

De manière plus précise, le premier organe d'actionnement (159) est destiné à actionner le premier organe d'accrochage (152) et la première butée escamotable (90) alors que le deuxième organe d'actionnement (159') est destiné à actionner le deuxième organe d'accrochage (152') et la deuxième butée escamotable (90').

Ce dispositif de commande à distance (158) comporte en sus des moyens de commande permettant de commander les organes d'actionnement (159, 159') en fonction de l'état du premier dispositif de manoeuvre (41).

Selon l'exemple de réalisation représenté, ces moyens de commande sont du genre hydraulique. A cet effet, le premier dispositif de manoeuvre (41) comporte deux éléments de manoeuvre (42, 42') qui sont, selon l'exemple de réalisation représenté, constitués de vérins de manoeuvre (42, 42') dudit premier dispositif de manoeuvre (41) permettant de pivoter les unités de travail (8, 8') avec les rouleaux de rappuyage (34, 34') vers le haut. Ces deux vérins de manoeuvre (42, 42') sont en communication avec le premier organe d'actionnement (159) et le deuxième organe d'actionnement (159').

A cet effet, le premier organe d'actionnement (159) est constitué d'un premier vérin d'actionnement (160) et le deuxième organe d'actionnement (159') est constitué d'un deuxième vérin d'actionnement (160').

A la lumière de la figure 7, on voit, selon l'exemple de réalisation représenté, que le premier vérin d'actionnement (160) est lié d'une part au bras d'appui (94) au moyen d'une vingtième articulation (162) d'axe longitudinal (162a) et d'autre part au support latéral (93) au moyen d'une vingt et unième articulation (163) d'axe longitudinal (163a).

En position de travail, lorsque la partie coudée (100) du bras d'appui (94) s'appuie sur la surface d'appui (113) du premier élément d'appui (91), la vingtième articulation (162) est située quelque peu plus haut que la treizième articulation (99) et quelque peu en arrière par rapport à cette dernière compte tenu de la direction d'avance au travail (13). L'axe longitudinal (162a) de la vingtième articulation (162) est quant à lui au moins sensiblement parallèle à l'axe longitudinal (99a) de la treizième articulation (99).

La vingt et unième articulation (163) est quant à elle située sensiblement au-dessus de la vingtième articulation (162) et son axe longitudinal (163a) est sensiblement parallèle à l'axe longitudinal (162a).

Selon l'exemple de réalisation représenté, la vingt et unième articulation (163) comporte un arbre (164) qui traverse d'une part, de part en part, un trou (165) prévu à cet effet dans le support latéral (93) et d'autre part une des extrémités du premier vérin d'actionnement (160). Aux alentours du trou (165) sont encore prévus d'autres trous (165) dans le support latéral (93) qui permettent avantageusement de déplacer le premier vérin d'actionnement (160) sur ledit support latéral (93). Les différents trous (165) forment avec l'arbre (164) un premier moyen de réglage (166) permettant de varier la position initiale de la première butée escamotable (90) de sorte à pouvoir varier la position de la première structure porteuse latérale (61) en fonction des différentes conditions de travail et en fonction des différents équipements dont est doté le semoir (5) ou la machine de travail du sol (4). A cet effet, lorsque l'on déplace le premier vérin d'actionnement (160) sur le support latéral (93) à l'aide de la vingt et unième articulation (163), le bras d'appui (94) pivote autour de la treizième articulation (99) ce qui permet de déplacer en hauteur la première butée escamotable (90).

Le deuxième organe d'actionnement (159') est semblable au premier organe d'actionnement (159) et comporte sensiblement le même nombre d'éléments qui sont une réplique sensiblement identique des éléments constituant le premier organe d'actionnement (159). Ce deuxième organe d'actionnement (159') ne sera donc pas décrit davantage. On notera toutefois que le deuxième organe d'actionnement (159') comporte, comme décrit précédemment, un deuxième vérin d'actionnement (160') lié d'une part au bras d'appui (94') de la deuxième butée escamotable (90') et d'autre part au support latéral (93') de ladite deuxième butée escamotable (90') à l'aide d'un deuxième moyen de réglage (166') semblable au premier moyen de réglage (166).

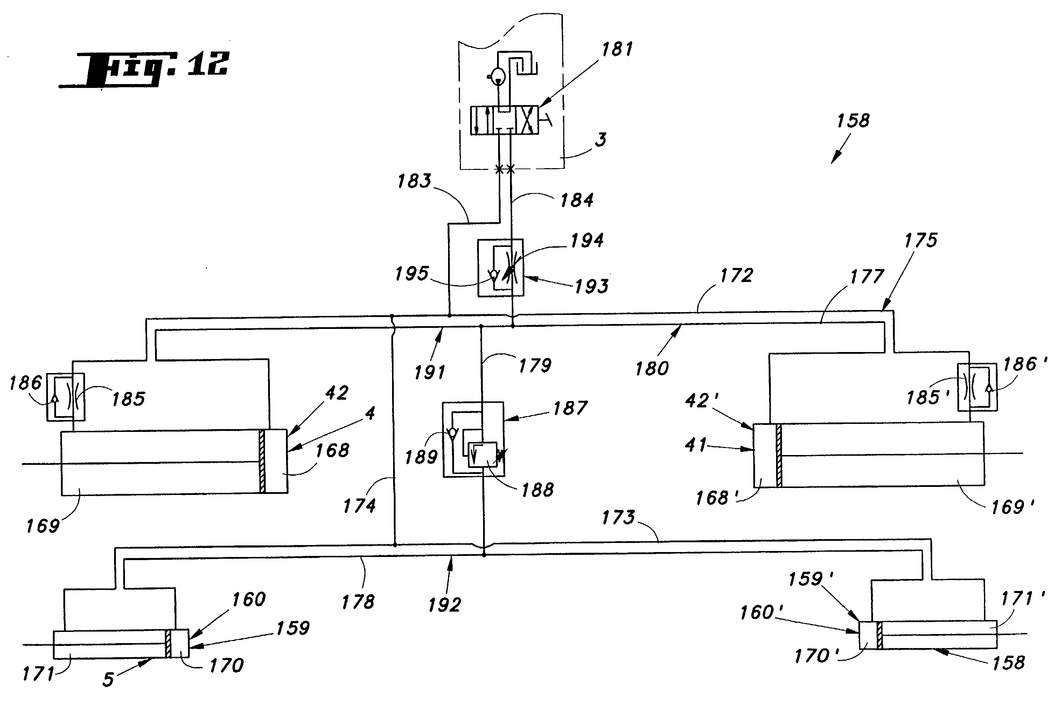

Sur la figure 12 est représenté un schéma hydraulique du dispositif de commande à distance (158) sur laquelle on voit que les vérins de manoeuvre (42, 42') du premier dispositif de manoeuvre (41) présentent chacun une première chambre (168, 168') et une deuxième chambre (169, 169') et que le premier et le deuxième vérins d'actionnement (160, 160') du dispositif de commande à distance (158) présentent chacun une première chambre (170, 170') et une deuxième chambre (171, 171'). On remarquera que, selon cet exemple de réalisation représenté, la section transversale active de chaque deuxième chambre (169, 169', 171, 171') des vérins de manoeuvre (42, 42') et des vérins d'actionnement (160, 160') est plus petite que la section transversale active de chaque première chambre (168, 168', 170, 170') du vérin (42, 42', 160, 160') correspondant. On notera encore que la section transversale active de chaque deuxième chambre (171, 171') des vérins d'actionnement (160, 160') est plus petite que la section transversale active de chaque deuxième chambre (169, 169') des vérins de manoeuvre (42, 42').

A la lumière de la figure 12, on voit que les deux deuxièmes chambres (169, 169') des deux vérins de manoeuvre (42, 42') sont en communication au moyen d'une première conduite (172).

Les deux deuxièmes chambres (171, 171') des deux vérins d'actionnement (160, 160') sont en communication au moyen d'une deuxième conduite (173).

On voit encore que la première conduite (172) communique avec la deuxième conduite (173) au moyen d'une troisième conduite (174) ce qui permet de mettre en communication les deuxièmes chambres (169, 169') des vérins de manoeuvre (42, 42') avec les deuxièmes chambres (171, 171') des vérins d'actionnement (160, 160').

Les deuxièmes chambres (169, 169') et les deuxièmes chambres (171, 171') des vérins respectifs (42, 42', 160, 160') ainsi couplées en parallèle font parties d'un premier circuit (175).

A la lumière de la figure 12, on voit en sus que les deux premières chambres (168, 168') des deux vérins de manoeuvre (42, 42') sont en communication au moyen d'une quatrième conduite (177).

Les deux premières chambres (170, 170') des deux vérins d'actionnement (160, 160') sont en communication au moyen d'une cinquième conduite (178).

On voit encore que la quatrième conduite (177) est en communication avec la cinquième conduite (178) au moyen d'une sixième conduite (179) ce qui permet donc de mettre en communication les premières chambres (168, 168') des vérins de manoeuvre (42, 42') avec les premières chambres (170, 170') des vérins d'actionnement (160, 160').

Les premières chambres (168, 168') et les premières chambres (170, 170') des vérins respectifs (42, 42', 160, 160') ainsi couplées en parallèle font partie d'un deuxième circuit (180).

A la lumière de la figure 12, on voit en sus que le premier circuit (175) et le deuxième circuit (180) sont des circuits hydrauliques qui sont alimentés par une centrale hydraulique (181) faisant partie, selon l'exemple de réalisation représenté, du véhicule moteur (3). A cet effet, est prévu d'une part une septième conduite (183) appartenant au premier circuit (175) mettant en communication le premier circuit (175) avec la centrale hydraulique (181) et d'autre part une huitième conduite (184) appartenant au deuxième circuit (180) mettant en communication le deuxième circuit (180) avec ladite centrale hydraulique (181).

On remarquera encore qu'il est prévu, à la sortie de chaque deuxième chambre (169, 169') du vérin de manoeuvre (42, 42') correspondant, un étranglement (185, 185') destiné à limiter le débit du fluide en provenance de ladite deuxième chambre (169, 169') correspondante. De tels étranglements (185, 185') permettent avantageusement de limiter la vitesse d'allongement des vérins de manoeuvre (42, 42') ce qui se traduit par une mise en position de travail des unités de travail (8, 8') relativement lente et sans brutalité. On notera que pour ce faire chaque étranglement (185, 185') est branché en série avec la première conduite (172) à la sortie de chaque deuxième chambre (169, 169') du vérin de manoeuvre (42, 42') correspondant. Pour une mise en position de transport plus rapide des unités de travail (8, 8') est prévu un clapet anti-retour (186, 186') par étranglement (185, 185').

Ainsi, le premier clapet anti-retour (186) est branché en parallèle avec le premier étranglement (185) de manière à laisser passer d'une part librement le fluide en direction de la deuxième chambre (169) du premier vérin de manoeuvre (42) et d'obliger d'autre part ledit fluide de passer par ledit premier étranglement (185) lorsqu'il sort de ladite deuxième chambre (169).

Le deuxième clapet anti-retour (186') est quant à lui branché en parallèle avec le deuxième étranglement (185') de manière à laisser passer d'une part librement le fluide en direction de la deuxième chambre (169') du deuxième vérin de manoeuvre (42') et d'obliger d'autre part ledit fluide de passer par ledit deuxième étranglement (185') lorsqu'il sort de ladite deuxième chambre (169').

A la lumière de la figure 12, on voit encore que le deuxième circuit (180) comporte une valve de séquence (187) destinée à autoriser l'alimentation en fluide des vérins d'actionnement (160, 160') en fonction de l'état des vérins de manoeuvre (42, 42'). A cet effet, la valve de séquence (187) est branchée en série avec la sixième conduite (179) de manière à être situé entre les premières chambres (168, 168') des vérins de manoeuvre (42, 42') et les premières chambres (170, 170') des vérins d'actionnement (160, 160').

Plus précisément, cette valve de séquence (187) est composée d'un premier limiteur de pression réglable (188) et d'un troisième clapet anti-retour (189). Ce premier limiteur de pression réglable (188) est branché en série avec la sixième conduite (179) de manière à être situé entre les premières chambres (168, 168') des vérins de manoeuvre (42, 42') et les premières chambres (170, 170') des vérins d'actionnement (160, 160'). Le troisième clapet anti-retour (189) est quant à lui branché en parallèle avec le premier limiteur de pression réglable (188) de manière à laisser passer d'une part librement le fluide en provenance des premières chambres (170, 170') des vérins d'actionnement (160, 160') vers la centrale hydraulique (181) du véhicule moteur (3) et d'obliger d'autre part ledit fluide de passer par ledit premier limiteur de pression réglable (188) lorsqu'il provient de ladite centrale hydraulique (181).

La valve de séquence (187) divise le deuxième circuit (180) en deux parties (191, 192). La première partie (191) est située en amont de la valve de séquence (187) lorsque la centrale hydraulique (181) débite du fluide dans le deuxième circuit (180) et comporte les premières chambres (168, 168') des vérins de manoeuvre (42, 42'), la première conduite (172) et une partie de la sixième conduite (179).

La deuxième partie (192) est située quant à elle en aval de la valve de séquence (187) lorsque la centrale hydraulique (181) débite du fluide dans le deuxième circuit (180) et comporte les premières chambres (170, 170') des vérins d'actionnement (160, 160'), la cinquième conduite (178) et une partie de la sixième conduite (179).

Lorsque la pression du fluide qui règne dans la première partie (191) du deuxième circuit (180) atteint un premier seuil, le premier limiteur de pression réglable (188) de la valve de séquence (187) autorise le passage du fluide vers la deuxième partie (192) dudit deuxième circuit (180).

A la lumière de la figure 12, on voit en sus que le deuxième circuit (180) comporte un limiteur de débit réglable (193) destiné à limiter le débit du fluide en provenance de la centrale hydraulique (181). Ce limiteur de débit réglable (193) est situé en amont de la valve de séquence (187) lorsque la centrale hydraulique (181) débite du fluide dans le deuxième circuit (180).

A cet effet, le limiteur de débit réglable (193) est branché en série avec la huitième conduite (184) et est composé d'un troisième étranglement (194) qui peut être réglé et d'un quatrième clapet anti-retour (195). Ce troisième étranglement (194) est branché en série avec la huitième conduite (184) de manière à être situé entre la centrale hydraulique (181) et le reste du deuxième circuit (180). Le quatrième clapet anti-retour (195) est quant à lui branché en parallèle avec le troisième étranglement (194) de manière à laisser passer d'une part librement le fluide en provenance du reste du deuxième circuit (180) vers la centrale hydraulique (181) et d'obliger d'autre part ledit fluide de passer par ledit troisième étranglement (194) lorsqu'il provient de ladite centrale hydraulique (181).

Ce limiteur de débit réglable (193) a pour fonction de limiter le débit du fluide en provenance de la centrale hydraulique (181) de manière à limiter la pression de la première partie (191) du deuxième circuit (180) lorsque les vérins de manoeuvre (42, 42') sont en phase d'allongement. Cette pression dans la première partie (191) peut ainsi être maintenue en dessous du seuil d'ouverture du premier limiteur de pression réglable (188) lors de l'allongement des vérins de manoeuvre (42, 42').

On notera encore que cette machine agricole combinée de travail du sol et de semis (1) est, telle que représentée sur la figure 1, sensiblement symétrique par rapport à un plan vertical (197) dirigé suivant la direction d'avance au travail (13) et passant au moins sensiblement au milieu des axes longitudinaux (10a, 10a') des premières articulations (10, 10') et des axes longitudinaux (81a, 81a') des douzièmes articulations (81, 81').

Cette machine agricole combinée de travail du sol et de semis (1) fonctionne de la manière suivante.

Lorsqu'elle est en position de travail les unités de travail du sol (8, 8') et les structures porteuses (60, 61, 61') s'étendent au moins sensiblement parallèlement au sol (S). Les rouleaux de rappuyage (34, 34') reposent sur la surface du sol (S) et les outils de travail du sol (33) et les éléments semeurs (63) s'étendent quelque peu sous la surface du sol (S). Lorsque le sol (S) est au moins sensiblement plan, les butées (90, 90', 118) reposent sur les éléments d'appui (91, 91', 119, 120) correspondants, ce qui permet de limiter le déplacement vers le bas du dispositif d'implantation (56) de la semence dans le sol (S).

Lorsque le sol (S) n'est pas plan, l'opérateur peut agir sur les différents dispositifs de liaison (45, 45', 84, 85) tels que décrit précédemment de manière à autoriser aux unités de travail du sol (8, 8') de pivoter autour des axes longitudinaux (10a, 10a') des premières articulations (10, 10') et aux structures porteuses latérales (61, 61') de pivoter autour des axes longitudinaux (81a, 81a') des douzièmes articulations (81, 81').

De tels dispositifs de liaison (45, 45', 84, 85) permettent avantageusement aux unités de travail du sol (8, 8') et aux structures porteuses latérales (61, 61') de suivre les inégalités du sol (S). Dans ce cas de figure, chaque structure porteuse latérale (61, 61') est soutenue par le rouleau de rappuyage (34, 34') correspondant, au moyen des premières butées (90, 90') qui s'appuient sur les premiers éléments d'appui (91, 91') alors que la structure porteuse centrale (60) est soutenue par l'un ou l'autre ou les deux rouleaux de rappuyage (34, 34') au moyen de la troisième butée (118) qui s'appuie sur l'élément d'appui primaire ou secondaire (119, 120) situé le plus en hauteur ou sur lesdits deux éléments (119, 120) s'ils s'étendent au même niveau.

L'opérateur peut encore choisir un autre mode d'utilisation selon les conditions de travail. Lorsque le sol (S) est au moins sensiblement plan, l'opérateur agit sur les différents dispositifs de liaison (45, 45', 84, 85) tels que décrit précédemment de manière à ne pas autoriser aux unités de travail du sol (8, 8') de pivoter autour des axes longitudinaux (10a, 10a') des premières articulations (10, 10') et aux structures porteuses latérales (61, 61') de pivoter autour des axes longitudinaux (81a, 81a') des douzièmes articulations (81, 81').

Dans ce cas de figure, les trois structures porteuses (60, 61, 61') peuvent être considérées comme une structure porteuse rigide ce qui ne nécessite plus de premier et de deuxième dispositifs d'appui (86, 86'). A cet effet, les trois structures porteuses (60, 61, 61') reposent sur les rouleaux de rappuyage (34, 34') uniquement au moyen de la troisième butée (118) qui s'appuie sur l'élément d'appui primaire ou secondaire (119, 120) situé le plus en hauteur ou sur les deux éléments (119, 120) s'ils s'étendent au même niveau.

Il convient encore de noter que, lors du travail, le dispositif de réglage (36, 36') des unités de travail du sol (8, 8') n'empêche nullement les herses rotatives (14, 14') de se déplacer vers le haut par rapport aux rouleaux de rappuyage (34, 34').

Ainsi, lorsqu'une herse rotative (14, 14') rencontre un obstacle, elle peut, indépendamment de l'autre herse rotative (14, 14'), se soulever sans problème pour passer par-dessus ledit obstacle sans que cela n'influence la position des structures porteuses (60, 61, 61') grâce notamment aux formes des surfaces d'appui (113, 113', 146, 147) des éléments d'appui (91, 91', 119, 120).

On notera également que les dispositifs d'appui (86, 86', 88) n'empêchent nullement le dispositif d'implantation (56) de la semence dans le sol de se déplacer vers le haut par rapport aux rouleaux de rappuyage (34, 34'). A cet effet, lorsque le dispositif d'implantation (56) de la semence dans le sol rencontre un obstacle, il peut se soulever pour passer par-dessus ledit obstacle.

Lorsque l'opérateur souhaite amener la machine combinée de travail du sol et de semis (1) de la position de travail dans la position de transport, il active dans un premier temps le dispositif d'attelage (2) du véhicule moteur (3) pour soulever ladite machine combinée de travail du sol et de semis (1) et la dégager du sol (S).

Dans un deuxième temps, l'opérateur active, au moyen de la centrale hydraulique (181) du véhicule moteur (3), le dispositif de relevage (73) du semoir (5) de manière à relever le dispositif d'implantation (56) et dégager davantage les éléments semeurs (63) du sol (S).

Ensuite, l'opérateur peut procéder de deux manières pour mener à bien la mise en position de transport de la machine agricole combinée de travail du sol et de semis (1). La première manière de faire consiste à pivoter d'abord les structures porteuses latérales (61, 61') vers le haut autour des axes longitudinaux (81a, 81a') des douzièmes articulations (81, 81') correspondantes et de pivoter ensuite les unités de travail du sol (8, 8') vers le haut autour des axes longitudinaux (10a, 10a') des premières articulations (10, 10') correspondantes.

A cet effet, l'opérateur active dans un troisième temps le dispositif de manoeuvre (82) à l'aide de la centrale hydraulique (181) qui alimente en fluide le quatrième vérin de manoeuvre (83) de manière à pivoter les structures porteuses latérales (61, 61') vers le haut comme sus-cité jusqu'à ce qu'elles s'étendent sensiblement verticalement vers le haut.

Ensuite, dans un quatrième temps, l'opérateur active le premier dispositif de manoeuvre (41) à l'aide de la centrale hydraulique (181) qui alimente en fluide notamment les deux vérins de manoeuvre (42, 42') de manière à pivoter les unités de travail du sol (8, 8') vers le haut comme sus-cité jusqu'à ce qu'elles s'étendent sensiblement verticalement vers le haut. Le fonctionnement de ce premier dispositif de manoeuvre (41) et du dispositif de commande à distance (158) sera décrit plus en détail ultérieurement. On remarquera encore que, selon cette première manière de faire, les butées (90, 90') sont dégagées des éléments d'appui (91, 91') lorsque les structures porteuses latérales (61, 61') sont pivotées vers le haut ce qui ne pose donc aucun problème de mise en position de transport.

La deuxième manière de faire consiste, quant à elle, à d'abord pivoter les unités de travail du sol (8, 8') vers le haut dans la position de transport et de pivoter ensuite les structures porteuses latérales (61, 61') vers le haut dans la position de transport.

A cet effet, l'opérateur active le premier dispositif de manoeuvre (41) à l'aide de la centrale hydraulique (181) en envoyant du fluide dans la septième conduite (183). Ce fluide en provenance de la centrale hydraulique (181) du véhicule moteur (3) accède aux deuxièmes chambres (169, 169') des vérins de manoeuvre (42, 42') du premier dispositif de manoeuvre (41) et aux deuxièmes chambres (171, 171') des vérins d'actionnement (160, 160') du dispositif de commande à distance (158). A cet effet, le fluide en provenance de la centrale hydraulique (181) passe par :
- la septième conduite (183) ;
- la première conduite (172) jusqu'à accéder aux deuxièmes chambres (169, 169') ;
- la troisième conduite (174) ;
   et
- la deuxième conduite (173) jusqu'à accéder aux deuxièmes chambres (171, 171').

Lorsque le fluide en provenance de la centrale hydraulique (181) pénètre dans les deuxièmes chambres (169, 169'), les vérins de manoeuvre (42, 42') se raccourcissent ce qui à pour effet de pivoter les unités de travail du sol (8, 8') vers le haut comme décrit précédemment et lorsque le fluide pénètre dans les deuxièmes chambres (171, 171'), les vérins d'actionnement (160, 160') se raccourcissent également ce qui à pour effet d'escamoter les butées escamotables (90, 90') en les pivotant vers le haut autour des axes longitudinaux (99a, 99a') respectifs des treizièmes articulations (99, 99').

On remarquera que, le pivotement des butées escamotables (90, 90') demande moins d'énergie que le pivotement des unités de travail du sol (8, 8'). De ce fait, lorsque les deuxièmes chambres (169, 169') et les deuxièmes chambres (171, 171') sont alimentées en fluide, les vérins d'actionnement (160, 160') se raccourcissent avant les vérins de manoeuvre (42, 42') ce qui permet d'escamoter les butées escamotables (90, 90') avant la mise en position de transport des unités de travail du sol (8, 8').

Lorsque les vérins d'actionnement (160, 160') se raccourcissent, le fluide contenu dans les premières chambres (170, 170') desdits vérins est chassé vers la centrale hydraulique (181) en passant par :
- la cinquième conduite (178) ;
- la sixième conduite (179) et le troisième clapet anti-retour (189) ;
- une partie de la quatrième conduite (177) ;
   et
- la huitième conduite (184) et le quatrième clapet anti-retour (195) jusqu'à aboutir à la centrale hydraulique (181).

Lorsque les vérins de manoeuvre (42, 42') se raccourcissent, le fluide contenu dans les premières chambres (168, 168') desdits vérins est chassé vers la centrale hydraulique (181) en passant par la quatrième conduite (177) à partir de laquelle il emprunte le même chemin que le fluide en provenance des premières chambres (170, 170').

Lorsque les unités de travail du sol (8, 8') sont dans leur position de transport, l'opérateur active le dispositif de manoeuvre (82) à l'aide de la centrale hydraulique (181) qui alimente en fluide le quatrième vérin de manoeuvre (83) de manière à pivoter les structures porteuses latérales (61, 61') vers le haut dans leur position de transport.

Lorsque l'opérateur souhaite amener la machine combinée de travail du sol et de semis (1) de la position de transport dans la position de travail, il procède de la manière inverse à celle décrite ci-dessus.

Là aussi, l'opérateur peut procéder de deux manières pour mener à bien la mise en position de travail.

La première manière de faire consiste à d'abord pivoter les unités de travail du sol (8, 8') vers le bas autour des axes longitudinaux (10a, 10a') correspondants et de pivoter ensuite les structures porteuses latérales (61, 61') vers le bas autour des axes longitudinaux (81a, 81a') correspondants. Selon cette première manière de faire, lors de la mise en position de travail, les butées escamotables (90, 90') viennent se poser sur les éléments d'appui (91, 91') ce qui ne pose donc aucun problème de mise en position de travail.

Le fonctionnement de ce premier dispositif de manoeuvre (41) et du dispositif de commande à distance (158) sera décrit plus en détail par la suite.

La deuxième manière de faire consiste, quant à elle, à d'abord pivoter les structures porteuses latérales (61, 61') vers le bas et d'ensuite pivoter les unités de travail du sol (8, 8') vers le bas dans la position de travail. On remarquera que, lorsque les unités de travail du sol (8, 8') sont dans leur position de travail les butées escamotables (90, 90') s'étendent dans leur position escamotée décrite précédemment.

Selon cette deuxième manière de faire, l'opérateur active le dispositif de manoeuvre (82) à l'aide de la centrale hydraulique (181) qui alimente en fluide le quatrième vérin de manoeuvre (83) de manière à pivoter les structures porteuses latérales (61, 61') vers le bas dans leur position de travail.

Ensuite l'opérateur active le premier dispositif de manoeuvre (41) à l'aide de la centrale hydraulique (181) en envoyant du fluide dans la huitième conduite (184). Ce fluide en provenance de la centrale hydraulique (181) du véhicule moteur (3) accède aux premières chambres (168, 168') des vérins de manoeuvre (42, 42') et aux premières chambres (170, 170') des vérins d'actionnement (160, 160'). A cet effet, le fluide en provenance de la centrale hydraulique (181) passe dans un premier temps par :
- la huitième conduite (184) et le troisième étranglement (194) ;
   et
- la quatrième conduite (177) jusqu'à accéder aux premières chambres (168, 168') des vérins de manoeuvre (42, 42').

Lorsque le fluide pénètre dans les premières chambres (168, 168') des vérins de manoeuvre (42, 42') ces derniers s'allongent de manière à pivoter les unités de travail du sol (8, 8') vers le bas dans leur position de travail.

Dès que les vérins de manoeuvre (42, 42') sont arrivés en bout de course, la pression qui règne dans la première partie (191) du deuxième circuit (180) augmente jusqu'à atteindre le premier seuil décrit précédemment. A ce moment là, le premier limiteur de pression réglable (188) de la valve de séquence (187) autorise le passage du fluide vers la deuxième partie (192) dudit deuxième circuit (180). A cet effet, le fluide en provenance de la centrale hydraulique (181) passe dans un deuxième temps par :
- la sixième conduite (179) et le premier limiteur de pression réglable (188) ; et
- la cinquième conduite (178) jusqu'à accéder aux premières chambres (170, 170') des vérins d'actionnement (160, 160').

Lorsque le fluide pénètre dans les premières chambres (170, 170'), les vérins d'actionnement (160, 160') s'allongent de manière à pivoter les butées escamotables (90, 90') dans la position de travail de manière à prendre appui sur les éléments d'appui (91, 91') correspondants.

On remarquera qu'un tel agencement entre les vérins de manoeuvre (42, 42') et les vérins d'actionnement (160, 160') permet d'abord de pivoter en position de travail les structures porteuses latérales (61, 61') avant le pivotement des unités de travail du sol (8, 8') puisque les butées escamotables (90, 90') sont amenées dans leur position de travail lorsque les éléments d'appui (91, 91') fixées auxdites unités de travail du sol (8, 8') sont déjà en place.

Lorsque les vérins de manoeuvre (42, 42') s'allongent, le fluide contenu dans les deuxièmes chambres (169, 169') est chassé vers la centrale hydraulique (181) en passant par la première conduite (172) et la septième conduite (183) jusqu'à aboutir à ladite centrale hydraulique (181).

Lorsque les vérins d'actionnement (160, 160') s'allongent, le fluide contenu dans les deuxièmes chambres (171, 171') est chassé vers la centrale hydraulique (181) en passant par la deuxième conduite (173) et la troisième conduite (174) après laquelle il emprunte le même chemin que le fluide en provenance des deuxièmes chambres (169, 169') des vérins de manoeuvre (42, 42').

Lors du travail, pour effectuer les manoeuvres de demi-tour, en bout de parcelle par exemple, l'opérateur agit uniquement sur le dispositif d'attelage (2) du véhicule moteur (3) pour soulever la machine combinée de travail du sol et de semis (1) pour la dégager du sol (S). Il peut en sus agir sur le dispositif de relevage (73) du semoir (5) pour dégager davantage le dispositif d'implantation (56) du sol (S).

Enfin on notera encore que, lors de chaque réglage de la profondeur de travail des herses rotatives (14, 14') au moyen du dispositif de réglage (36, 36') correpondant, il faut ajuster la position des éléments d'accrochage (151, 151') du dispositif d'ancrage automatique (148) correspondant au moyen du dispositif de fixation (153, 153') correspondant de manière à toujours assurer le contact entre l'élément d'accrochage (151, 151') et l'organe d'accrochage (152, 152') correspondant en position de travail.

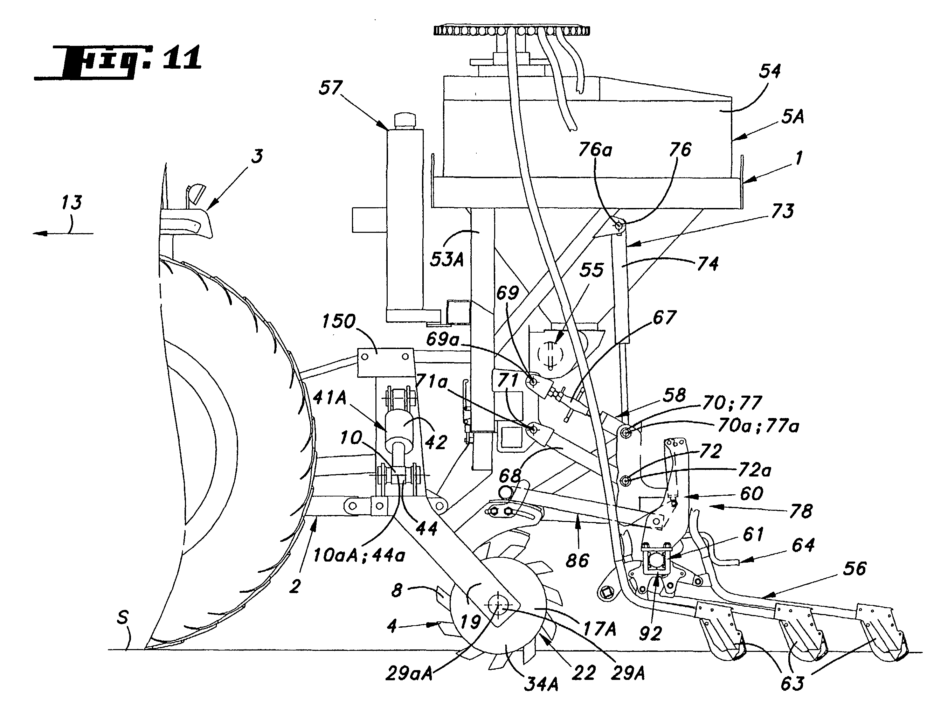

La figure 11 représente un semoir (5A) selon une deuxième forme de réalisation. Ce semoir (5A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du semoir (5) équipant la machine agricole combinée de travail du sol et de semis (1) décrite précédemment, ces éléments garderont également le même numéro de repère qui est en sus suivit de la lettre A. Ils ne seront décrits que si cela s'avère nécessaire.

Ce semoir (5A) selon cette deuxième forme de réalisation est dans l'ensemble très semblable au semoir (5). On remarquera toutefois que ce semoir (5A) est destiné à être attelé directement au véhicule moteur (3). A cet effet, le châssis (53A) du semoir (5A) comporte une structure d'attelage (150) permettant d'atteler le semoir (5A) au dispositif d'attelage (2) du véhicule moteur (3).

On remarquera encore que ce semoir (5A) comporte deux organes de référence (17A, 17'A) constitués de deux rouleaux de rappuyage (34A, 34'A) qui sont au moins sensiblement identiques aux rouleaux de rappuyage (34, 34') décrits précédemment.

Ces rouleaux de rappuyage (34A, 34'A) ont également comme fonction de rappuyer le sol (S) et de former des organes de référence permettant de contrôler la position du dispositif d'implantation (56) de la semence dans le sol (S).

On notera toutefois que les rouleaux de rappuyage (34A, 34'A) sont directement liés à la structure d'attelage (150) au moyen des articulations (29aA, 29a'A) et qu'ils peuvent également être pivotés vers le haut jusque dans une position sensiblement verticale de transport autour des axes longitudinaux (10aA, 10a'A) des articulations (10A, 10'A) au moyen d'un premier dispositif de manoeuvre (41A).

Le fonctionnement de ce semoir (5A) est dans son ensemble semblable à celui du semoir (5) décrit précédemment.

Finalement diverses modifications peuvent être apportées aux exemples qui viennent d'être décrits, notamment en ce qui concerne la constitution des divers éléments ou par substitution d'équivalents techniques, sans pour autant sortir du domaine de protection.

C'est ainsi qu'il est par exemple possible de concevoir un semoir comportant :
- une première structure porteuse latérale et une deuxième structure porteuse latérale ;
- un premier organe de référence et un deuxième organe de référence ;
- un premier dispositif d'appui situé à l'extrémité extérieure de la première structure porteuse latérale destinée à s'appuyer contre le premier organe de référence de manière à limiter le déplacement de la première structure porteuse latérale ;
- un deuxième dispositif d'appui situé à l'extrémité extérieure de la deuxième structure porteuse latérale destinée à s'appuyer contre le deuxième organe de référence de manière à limiter le déplacement de la deuxième structure porteuse latérale ;
- un troisième dispositif d'appui destiné à s'appuyer contre l'un au moins des organes de référence de manière à limiter le déplacement d'au moins une desdites structures porteuses à son extrémité intérieure.

Il est également possible de prévoir un moyen permettant d'escamoter au moyen d'un dispositif de commande à distance le premier et le deuxième éléments d'appui (91, 91') au lieu d'escamoter la première et la deuxième butées (90, 90'). Il est bien entendu également possible de prévoir deux moyens, l'un permettant d'escamoter la première et la deuxième butées (90, 90') et l'autre permettant d'escamoter le premier et le deuxième éléments d'appui (91, 91').

Il est également possible d'envisager d'autres moyens de réglage permettant de varier la position initiale des éléments d'appui (91, 91', 119, 120) des structures porteuses (60, 61, 61') sans agir sur les moyens de réglage (139, 166, 166') permettant de varier la position initiale des butées (90, 90', 118). Il est bien entendu également possible de prévoir deux moyens de réglage, l'un permettant d'agir sur les butées (90, 90', 118) et l'autre permettant d'agir sur les éléments d'appui (91, 91', 119, 120).

Il est encore possible de prévoir que le deuxième dispositif de manoeuvre (82) comporte deux vérins de manoeuvre liés chacun d'une part à une structure porteuse latérale (61, 61') au moyen d'un dispositif de liaison (84, 85) et d'autre part à la structure porteuse centrale (60) au moyen d'une articulation respective d'axe longitudinal au moins sensiblement parallèle aux axes longitudinaux (81a, 81a') des douzièmes articulations (81, 81').

Enfin, il est encore parfaitement possible de concevoir la machine agricole combinée de travail du sol et de semis avec une machine de travail du sol autre que celle représentée sur les figures 1 à 9. Ainsi, il est possible de remplacer les herses rotatives (14, 14') par des fraises rotatives ou des outils à dents non animés par exemple.

## Revendications

1. Semoir repliable à grande largeur de travail comportant :
- un châssis (53 ; 53A) destiné à être lié directement ou indirectement à un véhicule moteur (3) ;
- au moins un premier organe de référence (17 ; 17A) et un deuxième organe de référence (17'; 17'a) liés chacun audit châssis (53 ; 53A) au moyen d'une articulation (10, 10') respective permettant de les pivoter vers le haut dans une position de transport au moyen d'un premier dispositif de manoeuvre (41 ; 41A) ;
- un dispositif d'implantation (56) de la semence dans le sol comprenant au moins une première structure porteuse (61) et une deuxième structure porteuse (61') liées chacune directement ou indirectement audit châssis (53 ; 53A) au moyen d'une articulation (81, 81') respective permettant de les pivoter vers le haut dans une position de transport au moyen d'un deuxième dispositif de manoeuvre (82) ;
lesdits organes de référence (17, 17' ; 17A, 17'A) et lesdites structures porteuses (61, 61') s'étendent, en position de travail, au moins sensiblement parallèlement au sol (S) et au moins sensiblement orthogonalement à la direction d'avance au travail (13), ***caractérisé en ce* qu'**il est prévu d'une part au moins un dispositif d'appui escamotable (86, 86') comportant au moins une butée escamotable (90, 90') et au moins un élément d'appui (91, 91'), ledit dispositif d'appui escamotable (86, 86') étant destiné à s'appuyer contre l'un au moins des organes de référence (17, 17' ; 17A, 17'A) de manière à limiter le déplacement de l'une au moins des structures porteuses (61, 61') en position de travail, et d'autre part un dispositif de commande à distance (158) destiné à escamoter au moins partiellement ledit (lesdits) dispositif(s) d'appui escamotable(s) (86, 86') avant la mise en position de transport desdits organes de référence (17, 17'; 17A, 17'A) et/ou desdites structures porteuses (61, 61') ou à mettre en place ledit (lesdits) dispositifs) d'appui escamotable(s) (86, 86') après la mise en position de travail desdits organes de référence (17, 17' ; 17A, 17'A) et/ou desdites structures porteuses (61, 61'), ledit dispositif de commande à distance (158) comporte au moins un organe d'actionnement (159, 159').

2. Semoir selon la revendication 1, ***caractérisé en ce* qu'**il est prévu :
- un premier dispositif d'appui escamotable (86) destiné à s'appuyer contre le premier organe de référence (17 ; 17A) de manière à limiter le déplacement de la première structure porteuse (61) ;
et
- un deuxième dispositif d'appui escamotable (86') destiné à s'appuyer contre le deuxième organe de référence (17' ; 17'A) de manière à limiter le déplacement de la deuxième structure porteuse (61').

3. Semoir selon la revendication 2, ***caractérisé en ce* que** le premier dispositif d'appui escamotable (86) comporte d'une part une première butée escamotable (90) liée à la première structure porteuse latérale (61) dans le voisinage de l'extrémité extérieure (92) de celle-ci et d'autre part un premier élément d'appui (91) fixé au premier organe de référence (17 ; 17A) dans le voisinage de l'extrémité extérieure (22 ; 22A) de celui-ci, ladite première butée escamotable (90) étant destinée, en position de travail, à s'appuyer contre ledit premier élément d'appui (91).

4. Semoir selon la revendication 2 ou 3, ***caractérisé en ce* que** le deuxième dispositif d'appui escamotable (86) comporte d'une part une deuxième butée escamotable (90') liée à la deuxième structure porteuse (61') dans le voisinage de l'extrémité extérieure (116) de celle-ci et d'autre part un deuxième élément d'appui (91') fixé au deuxième organe de référence (17', 17'A) dans le voisinage de l'extrémité extérieure (22' ; 22'A) de celui-ci, ladite deuxième butée escamotable (90') étant destinée, en position de travail, à s'appuyer contre ledit deuxième élément d'appui (91').

5. Semoir selon les revendications 3 et 4, ***caractérisé en ce* qu'**il est prévu au moins un moyen de réglage (166, 166') par dispositif d'appui escamotable (86, 86') permettant de varier la position initiale des butées escamotables (90, 90') et/ou des éléments d'appui (91, 91').

6. Semoir selon l'une quelconque des revendications 2 à 5, ***caractérisé en ce* que** le dispositif de commande à distance (158) comporte :
- un premier organe d'actionnement (159) destiné à actionner le premier dispositif d'appui escamotable (86) ;
- un deuxième organe d'actionnement (159') destiné à actionner le deuxième dispositif d'appui escamotable (86').

7. Semoir selon la revendication 6 dans sa dépendance aux revendications 3, 4, ou 5, ***caractérisé en ce* que** :
- le premier organe d'actionnement (159) est destiné à actionner la première butée escamotable (90) ;
- le deuxième organe d'actionnement (159') est destiné à actionner la deuxième butée escamotable (90').

8. Semoir selon la revendication 1, ***caractérisé en ce* qu'**il est prévu, en sus, au moins un dispositif d'ancrage automatique (148, 148') liant automatiquement, lors de la mise en position de travail, au moins une structure porteuse (61, 61') à un organe de référence (17, 17' ; 17A, 17'A) correspondant et déliant automatiquement, lors de la mise en position de transport, ladite (lesdites) structure(s) porteuse(s) (61 ; 61') dudit organe de référence (17, 17' ; 17A, 17'A).

9. Semoir selon la revendication 8, ***caractérisé en ce* qu'**il est prévu :
- un premier dispositif d'ancrage automatique (148) destiné à lier automatiquement lors de la mise en position de travail la première structure porteuse (61) au premier organe de référence (17 ; 17A) ;
- un deuxième dispositif d'ancrage automatique (148') destiné à lier automatiquement, lors de la mise en position de travail, la deuxième structure porteuse (61') au deuxième organe de référence (17', 17'A).

10. Semoir selon la revendication 9, ***caractérisé en ce* que** le premier dispositif d'ancrage automatique (148) comporte d'une part un premier élément d'accrochage (151) fixé au premier organe de référence (17 ; 17A) dans le voisinage de l'extrémité extérieure (22 ; 22A) de celui-ci au moyen d'un premier dispositif de fixation (153) et d'autre part un premier organe d'accrochage (152) lié à la première structure porteuse (61) dans le voisinage de l'extrémité extérieure (92) de celle-ci et destiné à s'accrocher automatiquement au premier élément d'accrochage (151) lors de la mise en position de travail et à se décrocher automatiquement de celui-ci lors de la mise en position de transport.

11. Semoir selon la revendication 9 ou 10, ***caractérisé en ce* que** le deuxième dispositif d'ancrage automatique (148') comporte d'une part un deuxième élément d'accrochage (151') fixé au deuxième organe de référence (17' ; 17'A) dans le voisinage de l'extrémité extérieure (22' ; 22'A) de celui-ci au moyen d'un deuxième dispositif de fixation (153') et d'autre part un deuxième organe d'accrochage (152') lié à la deuxième structure porteuse (61') dans le voisinage de l'extrémité extérieure (92) de celle-ci et destiné à s'accrocher automatiquement au deuxième élément d'accrochage (151') lors de la mise en position de travail et à se décrocher automatiquement de celui-ci lors de la mise en position de transport.

12. Semoir selon les revendications 10 et 11, ***caractérisé en ce* que** chaque dispositif de fixation (153, 153') permet de fixer l'élément d'accrochage (151, 151') correspondant dans différentes positions.

13. Semoir selon les revendications 10 et 11 ou la revendication 12, ***caractérisé en ce* que** le premier élément d'accrochage (151) comporte une première portion d'appui (154) de forme particulière sur laquelle est destiné à s'appuyer le premier organe d'accrochage (152) en position de travail et **en ce que** le deuxième élément d'accrochage (151') comporte une deuxième portion d'appui (154') de forme particulière sur laquelle est destiné à s'appuyer le deuxième organe d'accrochage (152') en position de travail.

14. Semoir selon l'une quelconque des revendications 8 à 13, ***caractérisé en ce* qu'**il est prévu un dispositif de commande à distance (158) permettant d'escamoter au moins partiellement ledit (lesdits) dispositifs) d'ancrage automatique(s) (148, 148') avant la mise en position de transport desdits organes de référence (17, 17'; 17A,17'A) et desdites structures porteuses (61, 61') ou de mettre en place ledit (lesdits) dispositifs) d'ancrage automatique(s) (148, 148') après la mise en position de travail desdits organes de référence (17, 17' ; 17A, 17'A) et desdites structures porteuses (61, 61').

15. Semoir selon les revendications 9 et 14, ***caractérisé en ce* que** le dispositif de commande à distance (158) comporte :
- un premier organe d'actionnement (159) destiné à actionner le premier dispositif d'ancrage automatique (148) ;
- un deuxième organe d'actionnement (159') destiné à actionner le deuxième dispositif d'ancrage automatique (148').

16. Semoir selon la revendication 15 dans sa dépendance aux revendications 10 et 11, ***caractérisé en ce* que** :
- le premier organe d'actionnement (159) est destiné à actionner le premier organe d'accrochage (152) ;
- le deuxième organe d'actionnement (159') est destiné à actionner le deuxième organe d'accrochage (152').

17. Semoir selon l'une quelconque des revendications 6, 7, 15 ou 16, ***caractérisé en ce* que** le dispositif de commande à distance (158) comporte en sus des moyens de commande permettant de commander les organes d'actionnement (159 ; 159') en fonction de l'état du premier dispositif de manoeuvre (41 ; 41A).

18. Semoir selon la revendication 17, ***caractérisé en ce* que** le premier dispositif de manoeuvre (41 ; 41A) comporte au moins un élément de manoeuvre (42, 42') qui est en communication avec le premier organe d'actionnement (159) et le deuxième organe d'actionnement (159').

19. Semoir selon la revendication 18, ***caractérisé en ce* que** :
- le premier dispositif de manoeuvre (41 ; 41A) comporte deux éléments de manoeuvre (42 ; 42') :
* un premier élément de manoeuvre (42) constitué d'un premier vérin de manoeuvre (42)
* un deuxième élément de manoeuvre (42') constitué d'un deuxième vérin de manoeuvre (42')
lesdits vérins de manoeuvre (42 ; 42') présentant chacun une première chambre (168) et une deuxième chambre (169)
- le premier organe d'actionnement (159) est constitué d'un premier vérin d'actionnement (160) présentant une première chambre (170) et une deuxième chambre (171)
- le deuxième organe d'actionnement (159') est constitué d'un deuxième vérin d'actionnement (160') présentant une première chambre (170') et une deuxième chambre (171').

20. Semoir selon la revendication 19, ***caractérisé en ce* que** les deuxièmes chambres (169, 169') des vérins de manoeuvre (42, 42') sont couplées en parallèle avec les deuxièmes chambres (171, 171') des vérins d'actionnement (160, 160'), cet agencement faisant partie d'un premier circuit (175).

21. Semoir selon la revendication 20, ***caractérisé en ce* que** la section transversale de chaque deuxième chambre (171, 171') des vérins d'actionnement (160, 160') est plus petite que la section transversale de chaque deuxième chambre (169, 169') des vérins de manoeuvre (42, 42').

22. Semoir selon l'une quelconque des revendications 19 à 21, ***caractérisé en ce* que** les premières chambres (168, 168') des vérins de manoeuvre (42, 42') sont en communication avec les premières chambres (170, 170') des vérins d'actionnement (160, 160'), cet agencement faisant partie d'un deuxième circuit (180).

23. Semoir selon les revendications 20 et 22, ***caractérisé en ce* que** le premier circuit (175) et le deuxième circuit (180) sont des circuits hydrauliques qui sont alimentés par une centrale hydraulique (181).

24. Semoir selon la revendication 23, ***caractérisé en ce* que** le deuxième circuit (180) comporte une valve de séquence (187) destinée à autoriser l'alimentation en fluide des vérins d'actionnement (160, 160') en fonction de l'état des vérins de manoeuvre (42, 42').

25. Semoir selon la revendication 24, ***caractérisé en ce* que** la valve de séquence (187) est située entre les premières chambres (168, 168') des vérins de manoeuvre (42, 42') et les premières chambres (170, 170') des vérins d'actionnement (160, 160').

26. Semoir selon la revendication 23, ***caractérisé en ce* que** le deuxième circuit (180) comporte un limiteur de débit (193) destiné à limiter le débit du fluide en provenance de la centrale hydraulique (181).

27. Semoir selon la revendication 26, ***caractérisé en ce* que** le limiteur de débit (193) est situé en amont de la valve de séquence (187).

28. Semoir selon l'une quelconque des revendications 3 à 5 et l'une quelconque des revendications 10 à 13, ***caractérisé en ce* que** l'organe d'accrochage (152, 152') associé à une structure porteuse (61, 61') est formé par la butée escamotable (90, 90') associée à ladite structure porteuse (61, 61').

29. Semoir selon la revendication 28 ou l'une quelconque des revendications 3 à 5 et l'une quelconque des revendications 10 à 13, ***caractérisé en* ce que** l'élément d'accrochage (151, 151') associé à un organe de référence (17, 17' ; 17A, 17'A) est fixé à l'élément d'appui (91, 91') associé audit organe de référence (17, 17' ; 17A, 17'A) au moyen du dispositif de fixation (153, 153') correspondant.

30. Machine agricole combinée de travail du sol et de semis comportant une machine de travail du sol (4) et un semoir (5 ; 5A), ***caractérisée en ce* que** le semoir (5 ; 5A) est un semoir selon l'une quelconque des revendications 1 à 29.

31. Machine agricole combinée de travail du sol et de semis selon la revendication 30, ***caractérisée en ce* qu'**elle comporte deux rouleaux de rappuyage (34, 34' ; 34A, 34'A) constituant les organes de référence (17, 17'; 17A, 17'A).

32. Machine agricole combinée de travail du sol et de semis selon la revendication 31, ***caractérisée en ce* qu'**elle comporte des outils de travail du sol (33) qui peuvent se déplacer librement vers le haut par rapport aux rouleaux de rappuyage (34, 34' ; 34A, 34'A).

33. Machine agricole combinée de travail du sol et de semis selon la revendication 31 ou 32, ***caractérisée en ce* que** les rouleaux de rappuyage (34, 34' ; 34A, 34'A) sont liés à la machine de travail du sol (4).

34. Machine agricole combinée de travail du sol et de semis selon l'une quelconque des revendications 31 à 33, ***caractérisée en ce* que** les rouleaux de rappuyage (34, 34'; 34A, 34'A) sont de forme au moins sensiblement cylindrique et s'étendent au moins sensiblement sur toute la largeur du semoir (5 ; 5A) chaque rouleau de rappuyage (34, 34'; 34A, 34'A) étant destiné à rouler sur la surface du sol (S) en tournant autour de son axe longitudinal (34a, 34a' ; 34aA, 34a'A) respectif s'étendant au moins sensiblement horizontalement et transversalement à la direction d'avance au travail (13).

35. Machine agricole combinée de travail du sol et de semis selon la revendication 34 et la revendication 3 ou 4, ***caractérisée en ce* que** l'élément d'appui (91, 91') comporte une portion de surface cylindrique (114, 114') au moins sensiblement centré sur l'axe longitudinal (34a, 34a'; 34aA, 34a'A) du rouleau de rappuyage (34, 34' ; 34A, 34'A) correspondant.

## Patentansprüche

1. Klappbare Sämaschine mit großer Arbeitsbreite, die
- einen Rahmen (53; 53A) zur direkten oder indirekten Verbindung mit einem Motorfahrzeug (3);
- mindestens ein erstes Bezugselement (17; 17A) und ein zweites Bezugselement (17'; 17'A), die jeweils mittels eines jeweiligen Gelenks (10, 10'), das ihr Hochschwenken in eine Transportstellung mittels einer ersten Bedienungsvorrichtung (41; 41A) gestattet, mit dem Rahmen (53; 53A) verbunden sind;
- eine Vorrichtung (56) zum Einbringen von Saatgut in den Boden, die mindestens eine erste Tragkonstruktion (61) und eine zweite Tragkonstruktion (61') aufweist, die jeweils mittels eines jeweiligen Gelenks (81, 81'), das ihr Hochschwenken in eine Transportstellung mittels einer zweiten Bedienungsvorrichtung (82) gestattet, direkt oder indirekt mit dem Rahmen (53; 53A) verbunden sind,
umfasst;
wobei sich die Bezugselemente (17, 17'; 17A, 17'A) und die Tragkonstruktionen (61, 61') in Arbeitsstellung zumindest im Wesentlichen parallel zum Boden (S) und zumindest im Wesentlichen senkrecht zur Arbeitsvorschubrichtung (13) erstrecken, ***dadurch gekennzeichnet,* dass** einerseits mindestens eine einziehbare Stützvorrichtung (86, 86'), die mindestens einen einziehbaren Anschlag (90, 90') und mindestens ein Stützelement (91, 91') aufweist, wobei die einziehbare Stützvorrichtung (86, 86') zur Anlage an mindestens eines der Bezugselemente (17, 17'; 17A, 17'A) kommen soll, so dass die Verschiebung mindestens einer der Tragkonstruktionen (61, 61') in Arbeitsstellung begrenzt wird, und andererseits eine Fernsteuervorrichtung (158) vorgesehen ist, die die einziehbare(n) Stützvorrichtung(en) (86, 86') vor der Positionierung der Bezugselemente (17, 17'; 17A, 17'A) und/oder der Tragkonstruktionen (61, 61') in Transportstellung zumindest teilweise einziehen oder die einziehbare(n) Stützvorrichtung(en) (86, 86') nach der Positionierung der Bezugselemente (17, 17'; 17A, 17'A) und/oder der Tragkonstruktionen (61, 61') in Arbeitsstellung in Position bringen soll, wobei die Fernsteuervorrichtung (158) mindestens ein Betätigungselement (159, 159') aufweist.

2. Sämaschine nach Anspruch 1, ***dadurch gekennzeichnet,* dass**:
- eine erste einziehbare Stützvorrichtung (86), die zur Anlage an das erste Bezugselement (17; 17A) bestimmt ist, so dass die Verschiebung der ersten Tragkonstruktion (61) begrenzt wird;
und
- eine zweite einziehbare Stützvorrichtung (86'), die zur Anlage an das zweite Bezugselement (17'; 17'A) vorgesehen ist, so dass die Verschiebung der zweiten Tragkonstruktion (61') begrenzt wird,
vorgesehen sind.

3. Sämaschine nach Anspruch 2, ***dadurch gekennzeichnet,* dass** die erste einziehbare Stützvorrichtung (86) einerseits einen ersten einziehbaren Anschlag (90), der in der Nähe des äußeren Endes (92) der ersten seitlichen Tragkonstruktion (61) mit dieser verbunden ist, und andererseits ein erstes Stützelement (91), das in der Nähe des äußeren Endes (22; 22A) des ersten Bezugselements (17; 17A) an diesem befestigt ist, aufweist, wobei der erste einziehbare Anschlag (90) in Arbeitsstellung am ersten Stützelement (91) anliegen soll.

4. Sämaschine nach Anspruch 2 oder 3, ***dadurch gekennzeichnet,* dass** die zweite einziehbare Stützvorrichtung (86) einerseits einen zweiten einziehbaren Anschlag (90'), der in der Nähe des äußeren Endes (116) der zweiten Tragkonstruktion (61') mit dieser verbunden ist, und andererseits ein zweites Stützelement (91'), das in der Nähe des äußeren Endes (22'; 22'A) des Bezugselements (17', 17'A) an diesem befestigt ist, aufweist, wobei der zweite einziehbare Anschlag (90') in Arbeitsstellung am zweiten Stützelement (91') anliegen soll.

5. Sämaschine nach den Ansprüchen 3 und 4, ***dadurch gekennzeichnet,* dass** mindestens ein Einstellmittel (166, 166') pro einziehbarer Stützvorrichtung (86, 86') vorgesehen ist, das eine Änderung der Anfangsposition der einziehbaren Anschläge (90, 90') und/oder der Stützelemente (91, 91') gestattet.

6. Sämaschine nach irgend einem der Ansprüche 2 bis 5, ***dadurch gekennzeichnet,* dass** die Fernsteuervorrichtung (158):
- ein erstes Betätigungselement (159) zur Betätigung der ersten einziehbaren Stützvorrichtung (86);
- ein zweites Betätigungselement (159') zur Betätigung der zweiten einziehbaren Stützvorrichtung (86'),
aufweist.

7. Sämaschine nach Anspruch 6, sofern von den Ansprüchen 3, 4 oder 5 abhängig, ***dadurch gekennzeichnet,* dass**
- das erste Betätigungselement (159) den ersten einziehbaren Anschlag (90) betätigen soll;
- das zweite Betätigungselement (159') den zweiten einziehbaren Anschlag (90') betätigen soll.

8. Sämaschine nach Anspruch 1, ***dadurch gekennzeichnet,* dass** des Weiteren mindestens eine automatische Verankerungsvorrichtung (148, 148') vorgesehen ist, die bei der Positionierung in Arbeitsstellung mindestens eine Tragkonstruktion (61, 61') automatisch mit einem entsprechenden Bezugselement (17, 17'; 17A, 17'A) verbindet und bei der Positionierung in Transportstellung die Tragkonstruktion(en) (61; 61') des Bezugselements (17, 17'; 17A, 17'A) automatisch löst.

9. Sämaschine nach Anspruch 8, ***dadurch gekennzeichnet,* dass**:
- eine erste automatische Verankerungsvorrichtung (148), die bei der Positionierung in Arbeitsstellung die erste Tragkonstruktion (61) automatisch mit dem Bezugselement (17; 17A) verbinden soll;
- eine zweite automatische Verankerungsvorrichtung (148'), die bei der Positionierung in Arbeitsstellung die zweite Tragkonstruktion (61') automatisch mit dem zweiten Bezugselement (17', 17'A) verbinden soll,
vorgesehen sind.

10. Sämaschine nach Anspruch 9, ***dadurch gekennzeichnet,* dass** die erste automatische Verankerungsvorrichtung (148) einerseits ein erstes Festhakeelement (151), das in der Nähe des äußeren Endes (22; 22A) des ersten Bezugselements (17; 17A) mittels einer ersten Befestigungsvorrichtung (153) an diesem befestigt ist, und andererseits ein erstes Festhakeglied (152) aufweist, das in der Nähe des äußeren Endes (92) der ersten Tragkonstruktion (61) mit dieser verbunden ist und bei der Positionierung in Arbeitsstellung automatisch am ersten Festhakeelement (151) befestigt werden soll und bei der Positionierung in Transportstellung automatisch davon entkoppelt werden soll.

11. Sämaschine nach Anspruch 9 oder 10, ***dadurch gekennzeichnet,* dass** die zweite automatische Verankerungsvorrichtung (148') einerseits ein zweites Festhakeelement (151'), das in der Nähe des äußeren Endes (22'; 22'A) des zweiten Bezugselements (17'; 17'A) mittels einer zweiten Befestigungsvorrichtung (153') an diesem befestigt ist, und andererseits ein zweites Festhakeglied (152') aufweist, das in der Nähe des äußeren Endes (92) der zweiten Tragkonstruktion (61') mit dieser verbunden ist und bei der Positionierung in Arbeitsstellung automatisch am zweiten Festhakeelement (151') befestigt werden soll und bei der Positionierung in Transportstellung automatisch davon entkoppelt werden soll.

12. Sämaschine nach den Ansprüchen 10 und 11, ***dadurch gekennzeichnet*, dass** jede Befestigungsvorrichtung (153, 153') die Befestigung des entsprechenden Festhakeelements (151, 151') in verschiedenen Positionen gestattet.

13. Sämaschine nach den Ansprüchen 10 und 11 oder Anspruch 12, ***dadurch gekennzeichnet,* dass** das erste Festhakeelement (151) einen ersten Stützteil (154) mit besonderer Form aufweist, an den das erste Festhakeglied (152) in Arbeitsstellung zur Anlage kommen soll, und dass das zweite Festhakeelement (151') einen zweiten Stützteil (154') mit besonderer Form aufweist, an den das zweite Festhakeglied (152') in Arbeitsstellung zur Anlage kommen soll.

14. Sämaschine nach irgend einem der Ansprüche 8 bis 13, ***dadurch gekennzeichnet,* dass** eine Fernsteuervorrichtung (158) vorgesehen ist, mit der die automatische(n) Verankerungsvorrichtung(en) (148, 148') vor der Positionierung der Bezugselemente (17, 17'; 17A, 17'A) und der Tragkonstruktionen (61, 61') in Transportstellung zumindest teilweise eingezogen oder die automatische(n) Verankerungsvorrichtung(en) (148, 148') nach der Positionierung der Bezugselemente (17, 17'; 17A, 17'A) und der Tragkonstruktionen (61, 61') in Arbeitsstellung angeordnet werden können.

15. Sämaschine nach den Ansprüchen 9 und 14, ***dadurch gekennzeichnet,* dass** die Fernsteuervorrichtung (158):
- ein erstes Betätigungselement (159) zur Betätigung der ersten automatischen Verankerungsvorrichtung (148); und
- ein zweites Betätigungselement (159') zur Betätigung der zweiten automatischen Verankerungsvorrichtung (148'),
aufweist.

16. Sämaschine nach Anspruch 15, sofern von den Ansprüchen 10 und 11 abhängig, ***dadurch gekennzeichnet,* dass**:
- das erste Betätigungselement (159) das erste Festhakeglied (152) betätigen soll;
- das zweite Betätigungselement (159') das zweite Festhakeglied (152') betätigen soll.

17. Sämaschine nach irgend einem der Ansprüche 6, 7, 15 oder 16, ***dadurch gekennzeichnet,* dass** die Fernsteuervorrichtung (158) des Weiteren Bedienmittel aufweist, die die Bedienung der Betätigungselemente (159; 159') in Abhängigkeit vom Zustand der ersten Bedienungsvorrichtung (41; 41A) gestatten.

18. Sämaschine nach Anspruch 17, ***dadurch gekennzeichnet,* dass** die erste Bedienungsvorrichtung (41; 41A) mindestens ein Bedienungselement (42, 42') aufweist, das mit dem ersten Betätigungselement (159) und dem zweiten Betätigungselement (159') in Verbindung steht.

19. Sämaschine nach Anspruch 18, ***dadurch gekennzeichnet,* dass**:
- die erste Bedienungsvorrichtung (41; 41A) zwei Bedienungselemente (42; 42') aufweist:
* ein erstes Bedienungselement (42), das aus einem ersten Bedienungszylinder (42) besteht,
* ein zweites Bedienungselement (42'), das aus einem zweiten Bedienungszylinder (42') besteht,
wobei die Bedienungszylinder (42; 42') jeweils eine erste Kammer (168) und eine zweite Kammer (169) aufweisen,
- das erste Betätigungselement (159) aus einem ersten Betätigungszylinder (160) besteht, der eine erste Kammer (170) und eine zweite Kammer (171) aufweist
- das zweite Betätigungselement (159') aus einem zweiten Betätigungszylinder (160') besteht, der eine erste Kammer (170') und eine zweite Kammer (171') aufweist.

20. Sämaschine nach Anspruch 19, ***dadurch gekennzeichnet,* dass** die beiden Kammern (169, 169') der Bedienungszylinder (42, 42') parallel zu den zweiten Kammern (171, 171') der Betätigungszylinder (160, 160') geschaltet sind, wobei diese Anordnung einen Teil eines ersten Kreises (175) bildet.

21. Sämaschine nach Anspruch 20, ***dadurch gekennzeichnet,* dass** der Querschnitt jeder zweiten Kammer (171, 171') der Betätigungszylinder (160, 160') kleiner ist als der Querschnitt jeder zweiten Kammer (169, 169') der Bedienungszylinder (42, 42').

22. Sämaschine nach irgend einem der Ansprüche 19 bis 21, ***dadurch gekennzeichnet,* dass** die ersten Kammern (168, 168') der Bedienungszylinder (42, 42') mit den ersten Kammern (170, 170') der Betätigungszylinder (160, 160') in Verbindung stehen, wobei diese Anordnung einen Teil eines zweiten Kreises (180) bildet.

23. Sämaschine nach den Ansprüchen 20 und 22, ***dadurch gekennzeichnet,* dass** der erste Kreis (175) und der zweite Kreis (180) hydraulische Kreise sind, die durch eine Hydraulikeinrichtung (181) versorgt werden.

24. Sämaschine nach Anspruch 23, ***dadurch gekennzeichnet,* dass** der zweite Kreis (180) ein Folgeventil (187) enthält, das die Versorgung der Betätigungszylinder (160, 160') mit Fluid in Abhängigkeit vom Zustand der Bedienungszylinder (42, 42') gestatten soll.

25. Sämaschine nach Anspruch 24, ***dadurch gekennzeichnet,* dass** sich das Folgeventil (187) zwischen den ersten Kammern (168, 168') der Bedienungszylinder (42, 42') und den ersten Kammern (170, 170') der Betätigungszylinder (160, 160') befindet.

26. Sämaschine nach Anspruch 23, ***dadurch gekennzeichnet,* dass** der zweite Kreis (180) einen Durchflussbegrenzer (193) enthält, der den Durchfluss des von der Hydraulikeinrichtung (181) stammenden Fluids begrenzen soll.

27. Sämaschine nach Anspruch 26, ***dadurch gekennzeichnet,* dass** sich der Durchflussbegrenzer (193) stromaufwärts des Folgeventils (187) befindet.

28. Sämaschine nach irgend einem der Ansprüche 3 bis 5 und irgend einem der Ansprüche 10 bis 13, ***dadurch gekennzeichnet,* dass** das einer Tragkonstruktion (61, 61') zugeordnete Festhakeglied (152, 152') durch den der Tragkonstruktion (61, 61') zugeordneten einziehbaren Anschlag (90, 90') gebildet wird.

29. Sämaschine nach Anspruch 28 oder irgend einem der Ansprüche 3 bis 5 und irgend einem der Ansprüche 10 bis 13, ***dadurch gekennzeichnet,* dass** das einem Bezugselement (17, 17'; 17A, 17'A) zugeordnete Festhakeelement (151, 151') mittels der entsprechenden Befestigungsvorrichtung (153, 153') an dem dem Bezugselement (17, 17'; 17A, 17'A) zugeordneten Stützelement (91, 91') befestigt ist.

30. Kombinierte Landmaschine zur Bodenbearbeitung und zum Säen, die eine Bodenbearbeitungsmaschine (4) und eine Sämaschine (5; 5A) umfasst, ***dadurch gekennzeichnet,* dass** die Sämaschine (5; 5A) eine Sämaschine nach irgend einem der Ansprüche 1 bis 29 ist.

31. Kombinierte Landmaschine zur Bodenbearbeitung und zum Säen nach Anspruch 30, ***dadurch gekennzeichnet,* dass** sie zwei Presswalzen (34, 34'; 34A, 34'A) aufweist, die die Bezugselemente (17, 17'; 17A, 17'A) bilden.

32. Kombinierte Landmaschine zur Bodenbearbeitung und zum Säen nach Anspruch 31, ***dadurch gekennzeichnet,* dass** sie Bodenbearbeitungswerkzeuge (33) aufweist, die sich bezüglich der Presswalzen (34, 34'; 34A, 34'A) frei nach oben verschieben können.

33. Kombinierte Landmaschine zur Bodenbearbeitung und zum Säen nach Anspruch 31 oder 32, ***dadurch gekennzeichnet,* dass** die Presswalzen (34, 34'; 34A, 34'A) mit der Bodenbearbeitungsmaschine (4) verbunden sind.

34. Kombinierte Landmaschine zur Bodenbearbeitung und zum Säen nach irgend einem der Ansprüche 31 bis 33, ***dadurch gekennzeichnet,* dass** die Presswalzen (34, 34'; 34A, 34'A) eine im Wesentlichen zylindrische Form aufweisen und sich zumindest im Wesentlichen über die ganze Breite der Sämaschine (5; 5A) erstrecken, wobei jede Presswalze (34, 34'; 34A, 34'A) über die Oberfläche des Bodens (S) rollen soll, indem sie sich um ihre jeweilige Längsachse (34a, 34a'; 34aA, 34a'A) dreht, die sich zumindest im Wesentlichen horizontal und quer zur Arbeitsvorschubrichtung (13) erstreckt.

35. Kombinierte Landmaschine zur Bodenbearbeitung und zum Säen nach Anspruch 34 und Anspruch 3 oder 4, ***dadurch gekennzeichnet,* dass** das Stützelement (91, 91') einen Zylinderflächenteil (114, 114') aufweist, der zumindest im Wesentlichen auf der Längsachse (34a, 34a'; 34aA, 34a'A) der entsprechenden Presswalze (34, 34'; 34A, 34'A) zentriert ist.

## Claims

1. Folding seeder with a wide working width, comprising:
- a chassis (53; 53A) intended to be connected directly or indirectly to a motor vehicle (3);
- at least a first reference element (17; 17A) and a second reference element (17'; 17'A) each connected to the said chassis (53; 53A) by means of a respective articulation (10; 10') allowing them to be pivoted upwards into a transport position by means of a first operating device (41; 41A);
- a device (56) for planting seed in the ground, comprising at least a first bearing structure (61) and a second bearing structure (61') each connected directly or indirectly to the said chassis (53; 53A) by means of a respective articulation (81, 81') allowing them to be pivoted upwards into a transport position by means of a second operating device (82);
the said reference elements (17, 17'; 17A, 17'A) and the said bearing structures (61, 61') extending, in the work position, at least substantially parallel to the ground (S) and at least substantially orthogonally to the direction of forward travel during work (13), ***characterized in* that** there is provided, on the one hand, at least a retractable support device (86, 86') comprising at least a retractable stop (90, 90') and at least a support element (91, 91'), the said retractable support device (86, 86') being intended to press against at least one of the reference elements (17, 17'; 17A, 17'A) so as to limit the movement of at least one of the bearing structures (61, 61') in the work position and, on the other hand, a remote control device (158) intended to at least partially retract the said retractable support device(s) (86, 86') before the said reference elements (17, 17'; 17A, 17'A) and/or the said bearing structures (61, 61') are placed in the transport position or before positioning the said retractable support device(s) (86, 86') after the said reference elements (17, 17'; 17A, 17'A) and/or the said bearing structures (61, 61') have been placed in the work position, the said remote control device (158) comprising at least an actuating element (159, 159').

2. Seeder according to Claim 1, ***characterized in* that** there is provided:
- a first retractable support device (86) intended to press against the first reference element (17; 17A) so as to limit the movement of the first bearing structure (61); and
- a second retractable support device (86') intended to press against the second reference element (17'; 17'A) so as to limit the movement of the second bearing structure (61').

3. Seeder according to Claim 2, ***characterized in* that** the first retractable support device (86) comprises, on the one hand, a first retractable stop (90) connected to the first lateral bearing structure (61) in the vicinity of the outer end (92) thereof and, on the other hand, a first support element (91) fixed to the first reference element (17; 17A) in the vicinity of the outer end (22; 22A) thereof, the said first retractable stop (90) being intended, in the work position, to press against the said first support element (91).

4. Seeder according to Claim 2 or 3, ***characterized in* that** the second retractable support device (86) comprises, on the one hand, a second retractable stop (90') connected to the second bearing structure (61') in the vicinity of the outer end (116) thereof and, on the other hand, a second support element (91') fixed to the second reference element (17'; 17'A) in the vicinity of the outer end (22'; 22'A) thereof, the said second retractable stop (90') being intended, in the work position, to press against the said second support element (91').

5. Seeder according to Claims 3 and 4, ***characterized in* that** there is provided at least an adjusting means (166, 166') for each retractable support device (86, 86') allowing the initial position of the retractable stops (90, 90') and/or the support elements (91, 91') to be varied.

6. Seeder according to any one of Claims 2 to 5, ***characterized in* that** the remote control device (158) comprises:
- a first actuating element (159) intended to actuate the first retractable support device (86);
- a second actuating device (159') intended to actuate the second retractable support device (86').

7. Seeder according to Claim 6 in its dependency on Claims 3, 4 or 5, ***characterized in* that**:
- the first actuating element (159) is intended to actuate the first retractable stop (90);
- the second actuating element (159') is intended to actuate the second retractable stop (90').

8. Seeder according to Claim 1, ***characterized in* that** there is additionally provided at least an automatic anchoring device (148, 148') automatically, upon placement in the work position, connecting at least one bearing structure (61, 61') to a corresponding reference element (17, 17'; 17A, 17'A) and automatically, upon placement in the transport position, disconnecting the said bearing structure(s) (61; 61') from the said reference element (17, 17'; 17A, 17'A).

9. Seeder according to Claim 8, ***characterized in* that** there are provided:
- a first automatic anchoring device (148) intended automatically upon placement in the work position to connect the first bearing structure (61) to the first reference element (17; 17A);
- a second automatic anchoring device (148') intended automatically upon placement in the work position to connect the second bearing structure (61') to the second reference element (17'; 17'A).

10. Seeder according to Claim 9, ***characterized in* that** the first automatic anchoring device (148) comprises on the one hand a first hitching element (151) fixed to the first reference element (17; 17A) in the vicinity of the outer end (22; 22A) thereof by means of a first fixing device (153) and, on the other hand, a first hitching element (152) connected to the first bearing structure (61) in the vicinity of the outer end (92) thereof and intended to hitch automatically on the first hitching element (151) upon placement in the work position and to detach automatically therefrom upon placement in the transport position.

11. Seeder according to Claim 9 or 10, ***characterized in* that** the second automatic anchoring device (148') comprises on the one hand a second hitching element (151') fixed to the second reference element (17'; 17'A) in the vicinity of the outer end (22'; 22'A) thereof by means of a second fixing device (153') and, on the other hand, a second hitching element (152') connected to the second bearing structure (61') in the vicinity of the outer end (92) thereof and intended to hitch automatically on the second hitching element (151') upon placement in the work position and to detach automatically therefrom upon placement in the transport position.

12. Seeder according to Claims 10 and 11, ***characterized in* that** each fixing device (153, 153') allows the corresponding hitching element (151, 151') to be fixed in various positions.

13. Seeder according to Claims 10 and 11 or Claim 12, ***characterized in* that** the first hitching element (151) comprises a first support portion (154) of a special shape on which the first hitching element (152) is intended to press in the work position and **in that** the second hitching element (151') comprises a second support portion (154') of special shape against which the second hitching element (152') is intended to press in the work position.

14. Seeder according to any one of Claims 8 to 13, ***characterized in* that** there is provided a remote control device (158) allowing the said automatic anchoring device(s) (148, 148') to be retracted at least partially before the said reference elements (17, 17'; 17A, 17'A) and the said bearing structures (61, 61') are placed in the transport position or allowing the said automatic anchoring device(s) (148, 148') to be placed after the said reference elements (17, 17'; 17A, 17'A) and the said bearing structures (61, 61') have been placed in the work position.

15. Seeder according to Claims 9 and 14, ***characterized in* that** the remote control device (158) comprises:
- a first actuating element (159) intended to actuate the first automatic anchoring device (148);
- a second actuating element (159') intended to actuate the second automatic anchoring device (148').

16. Seeder according to Claim 15 in its dependency on Claims 10 and 11, ***characterized in* that**:
- the first actuating element (159) is intended to actuate the first hitching element (152);
- the second actuating element (159') is intended to actuate the second hitching element (152').

17. Seeder according to any one of Claims 6, 7, 15 or 16, ***characterized in* that** the remote control device (158) additionally comprises control means for controlling the actuating elements (159; 159') according to the state of the first operating device (41; 41A).

18. Seeder according to Claim 17, ***characterized in* that** the first operating device (41; 41A) comprises at least an operating element (42, 42') which is in communication with the first actuating element (159) and the second actuating element (159').

19. Seeder according to Claim 18, ***characterized in* that**:
- the first operating device (41; 41A) comprises two operating elements (42; 42'):
* a first operating element (42) consisting of a first operating ram (42)
* a second operating element (42') consisting of a second operating ram (42')
the said operating rams (42; 42') each having a first chamber (168) and a second chamber (169)
- the first actuating element (159) consists of a first actuating ram (160) having a first chamber (170) and a second chamber (171)
- the second actuating element (159') consists of a second actuating ram (160') having a first chamber (170') and a second chamber (171').

20. Seeder according to Claim 19, ***characterized in* that** the second chambers (169, 169') of the operating rams (42, 42') are coupled in parallel with the second chambers (171, 171') of the actuating rams (160, 160'), this arrangement forming part of a first circuit (175).

21. Seeder according to Claim 20, ***characterized in* that** the cross section of each second chamber (171, 171') of the actuating rams (160, 161) is smaller than the cross section of each second chamber (169, 169') of the operating rams (42, 42').

22. Seeder according to any one of Claims 19 to 21, ***characterized in* that** the first chambers (168, 168') of the operating rams (42, 42') are in communication with the first chambers (170, 170') of the actuating rams (160, 160'), this arrangement forming part of a second circuit (180).

23. Seeder according to Claims 20 and 22, ***characterized in* that** the first circuit (175) and the second circuit (180) are hydraulic circuits supplied by a hydraulic central unit (181).

24. Seeder according to Claim 23, ***characterized in* that** the second circuit (180) has a sequence valve (187) intended to allow fluid to be supplied to the actuating rams (160, 160') according to the state of the operating rams (42, 42').

25. Seeder according to Claim 24, ***characterized in* that** the sequence valve (187) is situated between the first chambers (168, 168') of the operating rams (42, 42') and the first chambers (170, 170') of the actuating rams (160, 160').

26. Seeder according to Claim 23, ***characterized in* that** the second circuit (180) comprises a flow limiter (193) intended to limit the flow rate of the fluid from the hydraulic central unit (181).

27. Seeder according to Claim 26, ***characterized in* that** the flow limiter (193) is situated upstream of the sequence valve (187).

28. Seeder according to any one of Claims 3 to 5 and any one of Claims 10 to 13, ***characterized in* that** the hitching element (152, 152') associated with a bearing structure (61, 61') is formed by the retractable stop (90, 90') associated with the said bearing structure (61, 61').

29. Seeder according to Claim 28 or any one of Claims 3 to 5 and any one of Claims 10 to 13, ***characterized in* that** the hitching element (151, 151') associated with a reference element (17, 17'; 17A, 17'A) is fixed to the support element (91, 91') associated with the said reference element (17, 17'; 17A, 17'A) by means of the corresponding fixing device (153, 153').

30. Combined soil-working and seeding agricultural machine comprising a machine for working the soil (4) and a seeder (5; 5A), ***characterized in* that** the seeder (5; 5A) is a seeder according to any one of Claims 1 to 29.

31. Combined soil-working and seeding agricultural machine according to Claim 30, ***characterized in* that** it comprises two press rollers (34, 34'; 34A, 34'A) constituting the reference elements (17, 17'; 17A, 17'A).

32. Combined soil-working and seeding agricultural machine according to Claim 31, ***characterized in* that** it comprises tools (33) for working the soil which can move freely upwards with respect to the press rollers (34, 34'; 34A, 34'A).

33. Combined soil-working and seeding agricultural machine according to Claim 31 or 32, ***characterized in* that** the press rollers (34, 34'; 34A, 34'A) are connected to the machine for working the soil (4).

34. Combined soil-working and seeding agricultural machine according to any one of Claims 31 to 33, ***characterized in* that** the press rollers (34, 34'; 34A, 34'A) are of at least substantially cylindrical shape and extend at least substantially across the entire width of the seeder (5; 5A), each press roller (34, 34'; 34A, 34'A) being intended to roll along the surface of the soil (S) revolving about its respective longitudinal axis (34a, 34a'; 34aA, 34a'A) which runs substantially horizontally and transversely to the direction of forward travel during work (13).

35. Combined soil-working and seeding agricultural machine according to Claim 34 and Claim 3 or 4, ***characterized in* that** the support element (91, 91') comprises a cylindrical surface portion (114, 114') at least substantially centred on the longitudinal axis (34a, 34a'; 34aA, 34a'A) of the corresponding press roller (34, 34'; 34A, 34'A).
